(19) Europäisches Patentamt / European Patent Office / Office européen des brevets

(11) **EP 4 761 444 A1**

(12) **EUROPEAN PATENT APPLICATION**
published in accordance with Art. 153(4) EPC

(43) Date of publication:
17.06.2026 Bulletin 2026/25

(21) Application number: 24852429.0

(22) Date of filing: 12.08.2024

(51) International Patent Classification (IPC):
H04W 72/50 (2023.01)     H04W 72/25 (2023.01)
H04W 74/0808 (2024.01)    H04W 24/08 (2009.01)
H04W 92/18 (2009.01)

(52) Cooperative Patent Classification (CPC):
H04W 24/08; H04W 72/25; H04W 72/50;
H04W 74/0808; H04W 92/18

(86) International application number:
PCT/KR2024/012018

(87) International publication number:
WO 2025/034076 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.08.2023  KR 20230104958
22.08.2023  US 202363533923 P
22.08.2023  US 202363534095 P

(71) Applicant: LG Electronics Inc.
Yeongdeungpo-gu
Seoul 07336 (KR)

(72) Inventors:
• PARK, Giwon
  Seoul 06772 (KR)
• LEE, Seungmin
  Seoul 06772 (KR)
• BACK, Seoyoung
  Seoul 06772 (KR)

(74) Representative: Plasseraud IP
104 Rue de Richelieu
CS92104
75080 Paris Cedex 02 (FR)

(54) **METHOD AND APPARATUS FOR PERFORMING COMMUNICATION IN WIRELESS COMMUNICATION SYSTEM**

(57) Provided are a method for a first device to perform wireless communication and an apparatus for supporting same. The method comprises the steps of: receiving, from a second device, information related to channel occupancy time (COT) sharing; receiving, from a base station, downlink control information (DCI) including information related to a first channel access priority class (CAPC); and performing transmission on the basis of selecting a logical channel. For example, on the basis of the information related to the COT sharing and the information related to the first CAPC, it may be determined whether the selected logical channel is a logical channel in which type-2 listen-before-talk (LBT) is used in the shared COT related to the COT sharing.

FIG. 20

receiving, from a second device, information related to COT sharing — S2010

receiving, from a base station, DCI including information related to a CAPC — S2020

based on selection of a logical channel, performing transmission — S2030

**Description**

**TECHNICAL FIELD**

This disclosure relates to a wireless communication system.

**BACKGROUND ART**

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

[Table 1]

| Per device peak data rate | 1 Tbps |
|---|---|
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

**DISCLOSURE**

**TECHNICAL PROBLEM**

The present disclosure provides a method and device capable of effectively providing services in a wireless communication system. In particular, the present disclosure provides a method and device for communication.

**TECHNICAL SOLUTION**

Based on an embodiment, a method for performing wireless communication by a first device may be provided. The method may include: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment, a first device adapted to perform wireless communication may be provided. The first device may include: at least one transceiver; at least one processor; and at least one memory connected to the at least one processor and storing instructions, and the instructions, based on being executed by the at least one processor, may cause the first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment, a processing device adapted to control a first device may be provided. For example, the processing device may include: at least one processor; and at least one memory connected to the at least one processor and storing instructions, and the instructions, based on being executed by the at least one processor, may cause the first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment, a non-transitory computer-readable storage medium storing instructions may be provided. The instructions, based on being executed, may cause a first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment, a method for performing wireless communication by a second device may be provided. The method may include: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment, a second device adapted to perform wireless communication may be provided. The second device may include: at least one transceiver; at least one processor; and at least one memory connected to the at least one processor and storing instructions, and the instructions, based on being executed by the at least one processor, may cause the second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment, a processing device adapted to control a second device may be provided. For example, the processing device may include: at least one processor; and at least one memory connected to the at least one processor and storing instructions, and the instructions, based on being executed by the at least one processor, may cause the second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment, a non-transitory computer-readable storage medium storing instructions may be provided. The instructions, based on being executed, may cause a second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

**ADVANTAGEOUS EFFECTS**

The present disclosure may provide a method and device capable of effectively providing services in a wireless communication system. For example, through embodiments proposed by the present disclosure, communication may be efficiently performed.

## BRIEF DESCRIPTION OF THE DRAWINGS

FIG. 1 shows a communication structure providable in a 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows an interlaced RB, based on an embodiment of the present disclosure.

FIG. 10 shows an example of a wireless communication system supporting an unlicensed band, based on an embodiment of the present disclosure.

FIG. 11 shows a method of occupying resources in an unlicensed band, based on an embodiment of the present disclosure.

FIG. 12 shows a case in which a plurality of LBT-SBs are included in an unlicensed band, based on an embodiment of the present disclosure.

FIG. 13 shows CAP operations performed by a base station to transmit a downlink signal through an unlicensed band, based on an embodiment of the present disclosure.

FIG. 14 shows type 1 CAP operations performed by a UE to transmit an uplink signal, based on an embodiment of the present disclosure.

FIG. 15 shows a channel access procedure, based on an embodiment of the present disclosure.

FIG. 16 shows a procedure related to LBT detection, based on an embodiment of the present disclosure.

FIG. 17 shows an operation of a UE related to a shared COT, based on an embodiment of the present disclosure.

FIG. 18 shows an operation of a UE related to COT return, based on an embodiment of the present disclosure.

FIG. 19 shows a procedure related to a UE related to a shared COT, based on an embodiment of the present disclosure.

FIG. 20 shows a method for a first device to perform wireless communication, based on an embodiment of the present disclosure.

FIG. 21 shows a method for a second device to perform wireless communication, based on an embodiment of the present disclosure.

FIG. 22 shows a communication system 1, based on an embodiment of the present disclosure.

FIG. 23 shows wireless devices, based on an embodiment of the present disclosure.

FIG. 24 shows a signal process circuit for a transmission signal, based on an embodiment of the present disclosure.

FIG. 25 shows another example of a wireless device, based on an embodiment of the present disclosure.

FIG. 26 shows a hand-held device, based on an embodiment of the present disclosure.

FIG. 27 shows a vehicle or an autonomous vehicle, based on an embodiment of the present disclosure.

**MODE FOR INVENTION**

In the present disclosure, "A or B" may mean "only A", "only B" or "both A and B". For example, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". For example, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

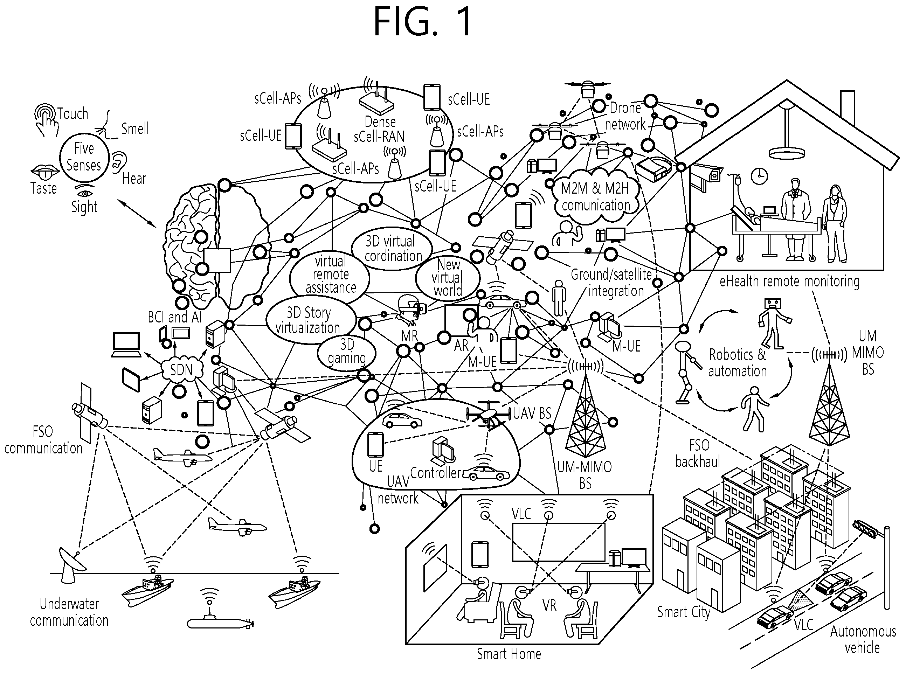

FIG. 1 shows a communication structure providable in a 6G system, based on an embodiment of the present disclosure. The embodiment of FIG. 1 may be combined with various embodiments of the present disclosure.

In 6G, new network characteristics may be as follows.

- Satellites integrated network

- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

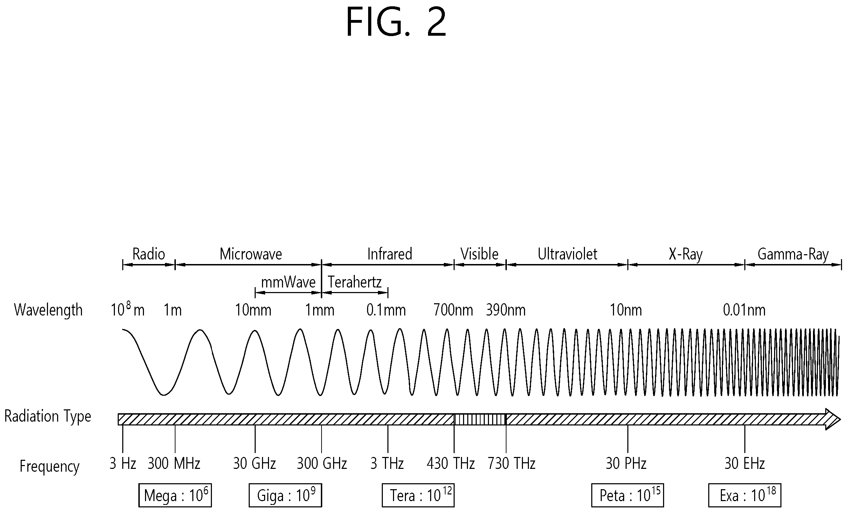

- Artificial Intelligence (AI): When AI is introduced to communication, real-time data transmission may be simplified and improved. AI may determine a method of performing complicated target tasks using countless analysis. For example, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

- Advanced air mobility (AAM): An AAM is a superordinate concept of urban air mobility (UAM), which is air transportation that can be used in an urban area, and may refer to a means of transportation that includes movement between the urban area and a regional hub.

- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

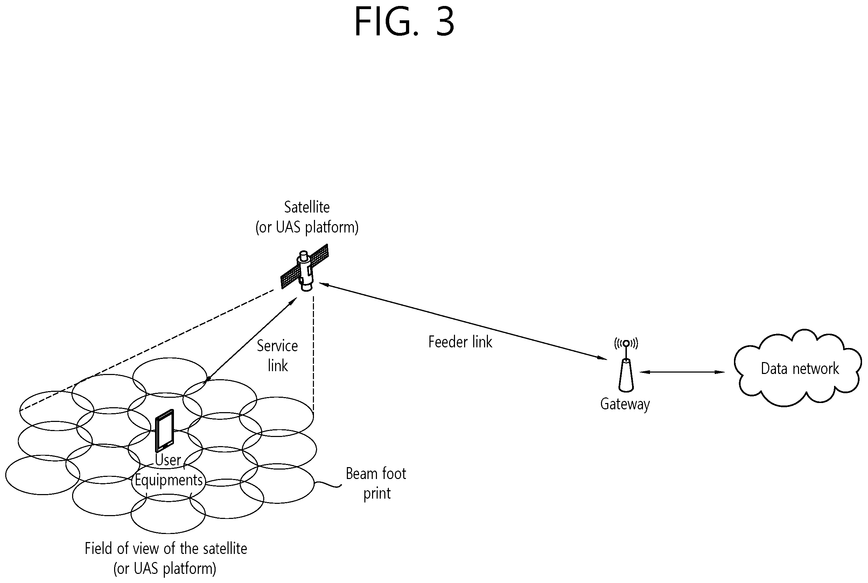

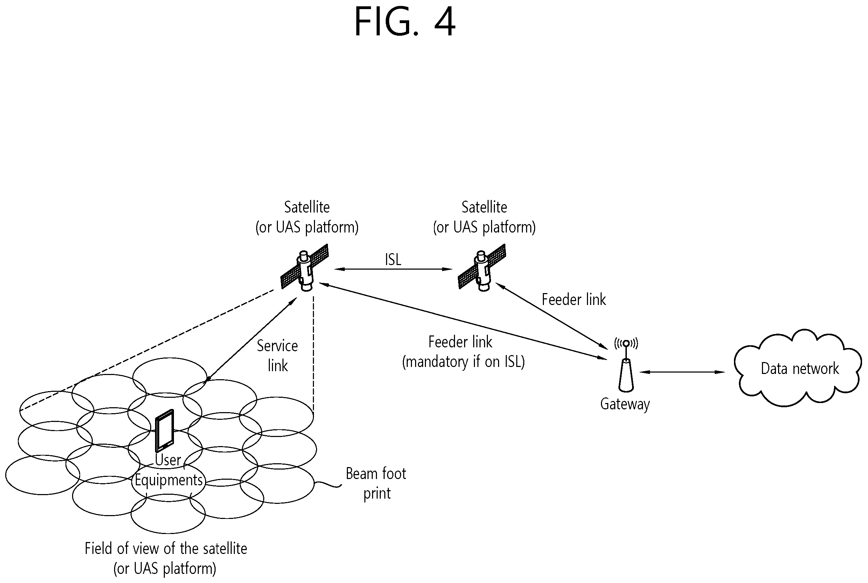

- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

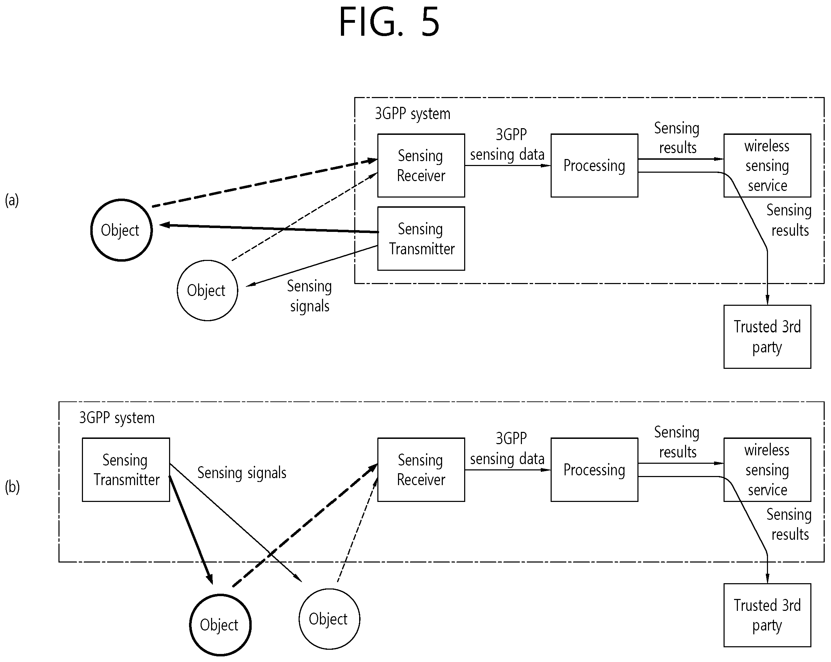

- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP or an extended CP is used.

[Table 2]

| CP type | SCS (15*2$^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

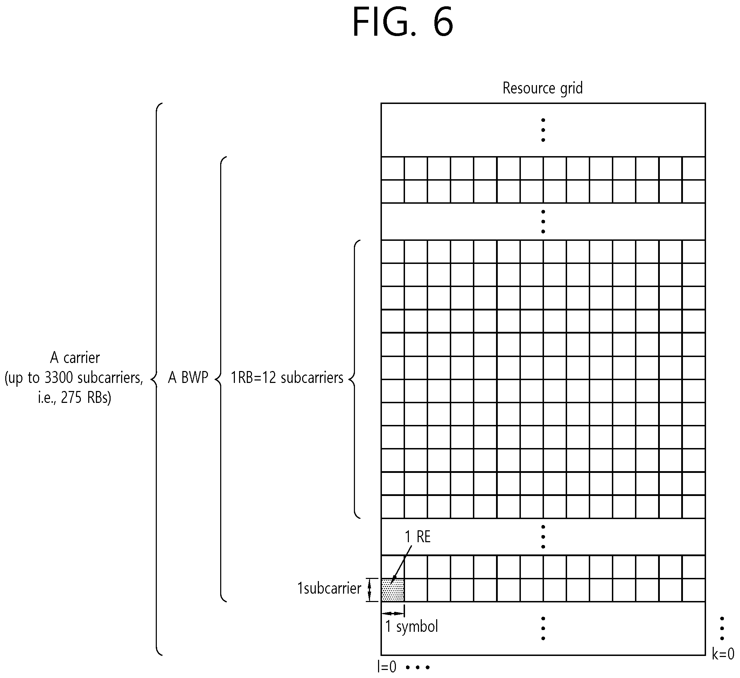

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

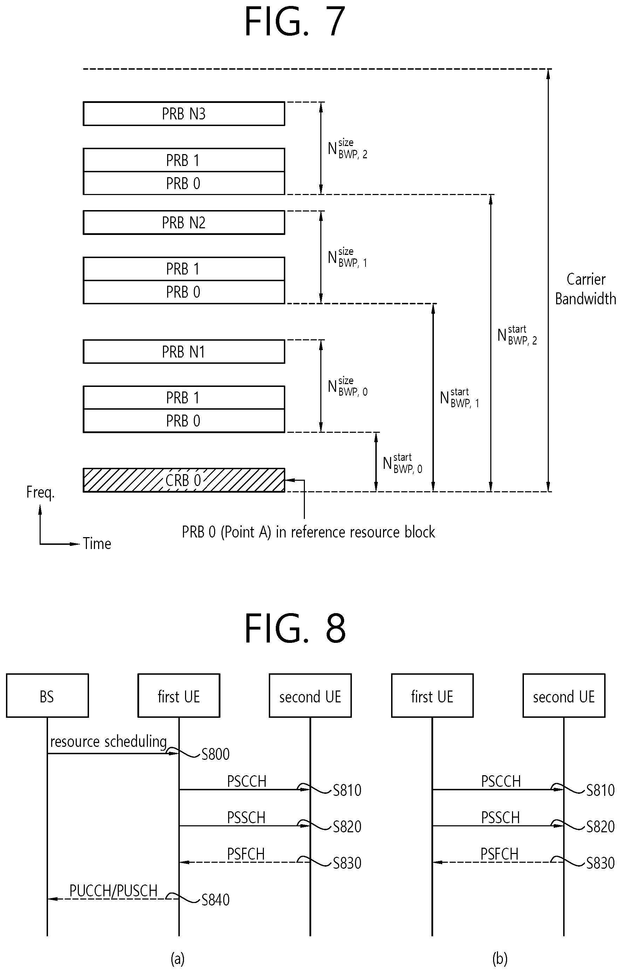

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resources to be used by a UE for SL transmission. For example, in step S800, the base station may transmit, to a first UE, information related to SL resources and/or information related to sensing resources (e.g., UL resources or SL resources). For example, the sensing resources (e.g., UL resources or SL resources) may include PUCCH resources and/or PUSCH resources. For example, the sensing resources (e.g., UL resources or SL resources) may be resources for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

For example, SCI carried on PSCCH may be a 1st-stage SCI, which may transport sidelink scheduling information. For example, SCI format 1-A may be used for the scheduling of PSSCH and 2nd-stage-SCI on PSSCH. For example, SCI carried on PSSCH may be a 2nd-stage SCI, which may transport sidelink scheduling information.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 3
- CSI request - 1 bit

[Table 3]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Here, an example of a procedure for transmitting PSFCH is described.

A UE may be indicated by an SCI format scheduling a PSSCH reception to transmit a PSFCH with HARQ-ACK information in response to the PSSCH reception.

The UE may provide HARQ-ACK information that includes ACK or NACK, or only NACK.

A UE may be provided, by sl-PSFCH-Period-r16, a number of slots in a resource pool for a period of PSFCH transmission occasion resources. If the number is zero, PSFCH transmissions from the UE in the resource pool may be disabled.

A UE may expect that a slot $t'^{SL}_k$ $(0 \leq k < T'_{max})$ has a PSFCH transmission occasion resource if $k$ mod $N^{PSFCH}_{PSSCH} = 0$, where $t'^{SL}_k$ may be defined in TS 38.214, and $T'_{max}$ may be a number of slots that belong to the resource pool within 10240 msec according to TS 38.214, and $N^{PSFCH}_{PSSCH}$ may be provided by sl-PSFCH-Period-r16.

If a UE receives a PSSCH in a resource pool and the HARQ feedback enabled/disabled indicator field in an associated SCI format 2-A or a SCI format 2-B has value 1, the UE may provide the HARQ-ACK information in a PSFCH transmission in the resource pool. The UE may transmit the PSFCH in a first slot that includes PSFCH resources and is at least a number of slots, provided by sl-MinTimeGapPSFCH-r16, of the resource pool after a last slot of the PSSCH reception.

Referring to (a) of FIG. 8, in step S840, the first UE may transmit SL HARQ feedback to the base station through the PUCCH and/or the PUSCH.

Meanwhile, in the conventional unlicensed spectrum (NR-U), a communication method between a UE and a base station is supported in an unlicensed band. In addition, a mechanism for supporting communication in an unlicensed band between sidelink UEs is planned to be supported in Rel-18.

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

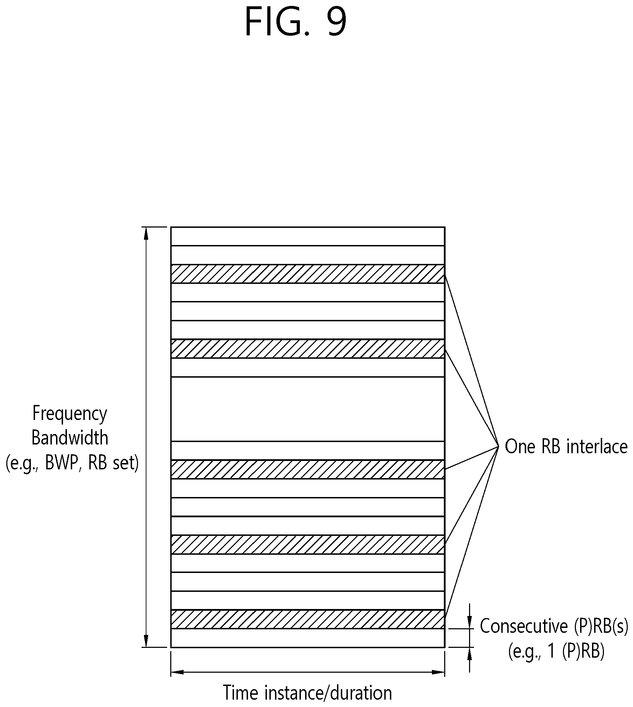

FIG. 9 shows an interlaced RB, based on an embodiment of the present disclosure. The embodiment of FIG. 9 may be combined with various embodiments of the present disclosure.

Referring to FIG. 9, interlaces of RBs may be defined in a frequency domain. An interlace me {0, 1, ..., M-1} may comprise (common) RBs {m, M+m, 2M+m, 3M+m, ...}, where M may represent the number of interlaced RBs given by Table 4.

[Table 4]

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

In the present disclosure, a channel may refer to a set of frequency domain resources in which Listen-Before-Talk (LBT) is performed. In NR-U, the channel may refer to an LBT bandwidth with 20 MHz and may have the same meaning as an RB set. For example, the RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

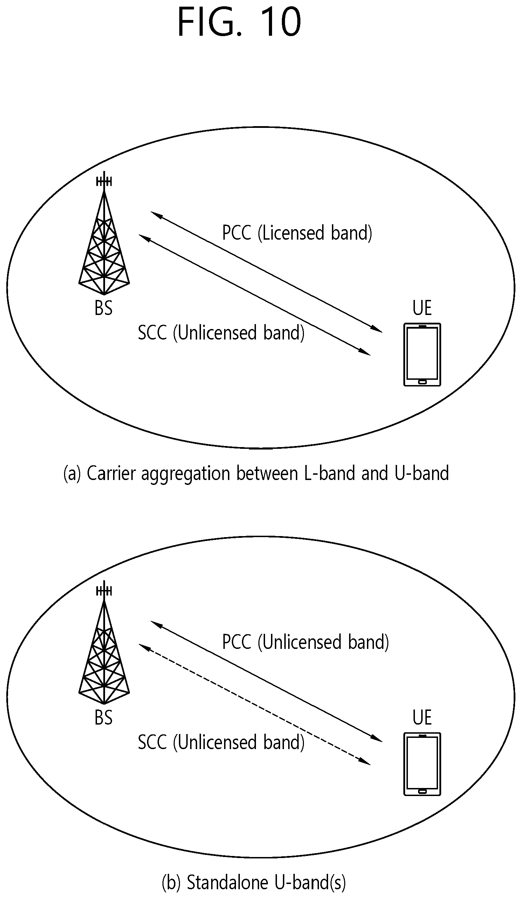

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. For example, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.

- Channel: a carrier or a part of a carrier composed of a contiguous set of RBs in which a channel access procedure is performed in a shared spectrum.

- Channel access procedure (CAP): a procedure of assessing channel availability based on sensing before signal transmission in order to determine whether other communication node(s) are using a channel. A basic sensing unit is a sensing slot with a duration of $T_{sl}$ = 9 us. The base station or the UE senses a channel during a sensing slot duration. If power detected for at least 4 us within the sensing slot duration is less than an energy detection threshold $X_{thresh}$, the sensing slot duration $T_{sl}$ is considered to be idle. Otherwise, the sensing slot duration $T_{sl}$ = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

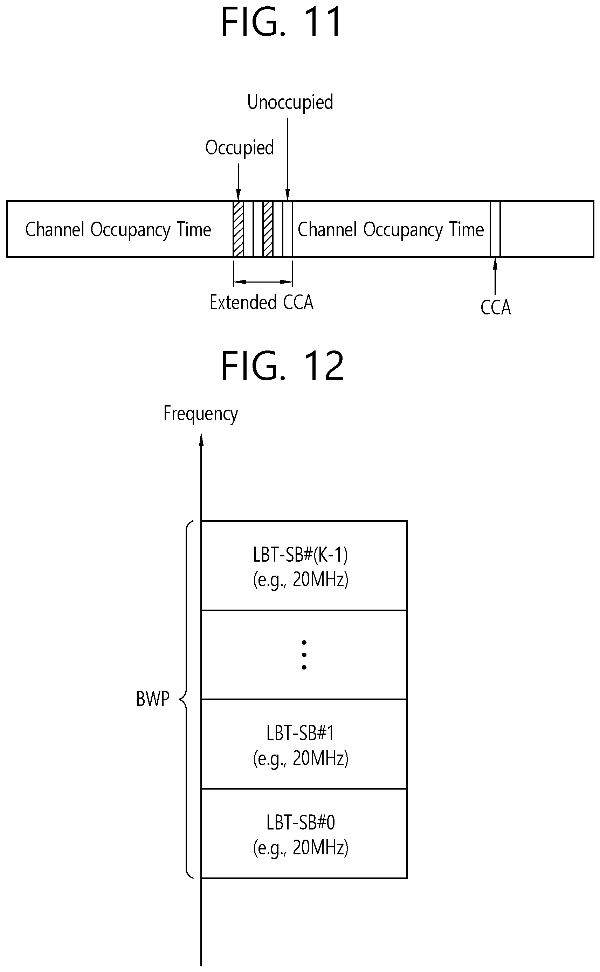

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., $X_{Thresh}$) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 5 shows an example of the channel access procedure (CAP) supported in NR-U.

[Table 5]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |
| UL or SL | Type 1 CAP | CAP with random back-off<br>- time duration spanned by the sensing slots that are sensed to be idle before an uplink or sidelink transmission(s) is random |
| | Type 2 CAP<br>- Type 2A, 2B, 2C | CAP without random back-off<br>- time duration spanned by sensing slots that are sensed to be idle before an uplink or sidelink transmission(s) is deterministic |

Referring to Table 5, the LBT type or CAP for DL/UL/SL transmission may be defined. However, Table 5 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB # (K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:

- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 6 shows which CAPC should be used for standardized 5QI, for example, a CAPC to be used for a given QoS flow. For standardized 5QI, CAPCs are defined as shown in the table below, and for non-standardized 5QI, the CAPC with the best QoS characteristics should be used.

[Table 6]

| CAPC | 5QI |
|------|-----|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

(1) Type 1 downlink (DL) CAP Method

In the type 1 DL CAP, the length of a time duration spanned by sensing slots sensed to be idle before transmission(s) may be random. The type 1 DL CAP may be applied to the following transmissions:

- Transmission(s) initiated by the base station including (i) a unicast PDSCH with user plane data or (ii) the unicast PDSCH with user plane data and a unicast PDCCH scheduling user plane data, or

- Transmission(s) initiated by the base station including (i) a discovery burst only or (ii) a discovery burst multiplexed with non-unicast information.

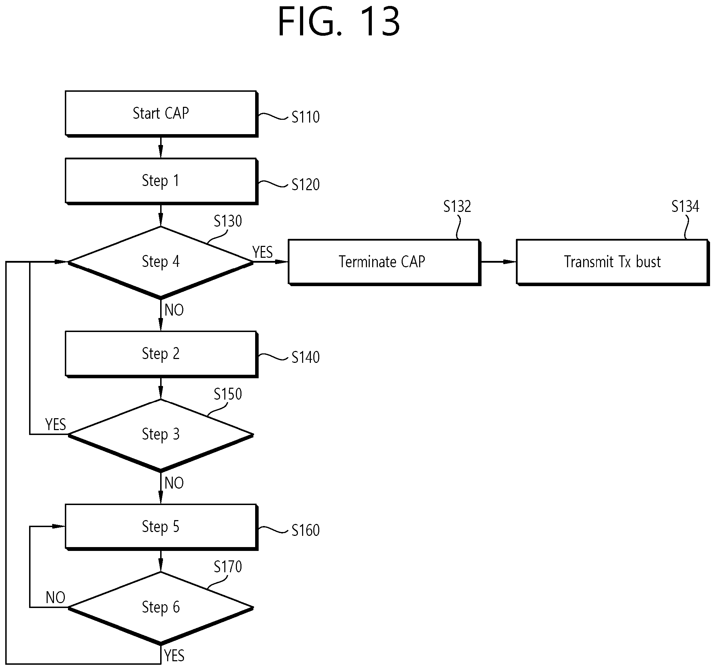

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration $T_d$. Then, if a counter N is zero, the base station may perform transmission (S134). In this case, the base station may adjust the counter N by sensing the channel for additional sensing slot duration(s) according to the following steps:

Step 1) (S120) The base station sets N to $N_{init}$ (N= $N_{init}$), where $N_{init}$ is a random number uniformly distributed between 0 and $CW_p$. Then, step 4 proceeds.

Step 2) (S140) If N>0 and the base station determines to decrease the counter, the base station sets N to N-1 (N=N-1).

Step 3) (S150) The base station senses the channel for the additional sensing slot duration. If the additional sensing slot duration is idle (Y), step 4 proceeds. Otherwise (N), step 5 proceeds.

Step 4) (S130) If N=0 (Y), the base station terminates the CAP (S132). Otherwise (N), step 2 proceeds.

Step 5) (S160) The base station senses the channel until either a busy sensing slot is detected within an additional defer duration $T_d$ or all the slots of the additional defer duration $T_d$ are detected to be idle.

Step 6) (S170) If the channel is sensed to be idle for all the slot durations of the additional defer duration $T_d$ (Y), step 4 proceeds. Otherwise (N), step 5 proceeds.

Table 7 shows that $m_p$, a minimum contention window (CW), a maximum CW, a maximum channel occupancy time (MCOT), and an allowed CW size, which are applied to the CAP, vary depending on channel access priority classes.

[Table 7]

| Channel Access Priority Class (p) | $m_p$ | $CW_{min,p}$ | $CW_{max,p}$ | $T_{mcot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 7, a contention window size (CWS), a maximum COT value, etc. for each CAPC may be defined. For example, $T_d$ may be equal to $T_f + m_p * T_{sl}$ ($T_d = T_f + m_p * T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p} <= CW_p <= CW_{max,p}$. $CW_p$ may be configured by $CW_p = CW_{min,p}$ and updated before step 1 based on HARQ-ACK feedback (e.g., the ratio of ACK or NACK) for a previous DL burst (e.g., PDSCH) (CW size update). For example, $CW_p$ may be initialized to $CW_{min,p}$ based on the HARQ-ACK feedback for the previous DL burst. Alternatively, $CW_p$ may be increased to the next higher allowed value or maintained as it is.

(2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$, where the duration $T_f$ includes a sensing slot at the beginning thereof.

- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for $T_f$ = 16 us. $T_f$ includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

(1) Type 1 uplink (UL) CAP Method

In the type 1 UL CAP, the length of a time duration spanned by sensing slots sensed to be idle before transmission(s) is random. The type 1 UL CAP may be applied to the following transmissions.

- PUSCH/SRS transmission(s) scheduled and/or configured by the base station
- PUCCH transmission(s) scheduled and/or configured by the base station
- Transmission(s) related to a random access procedure (RAP)

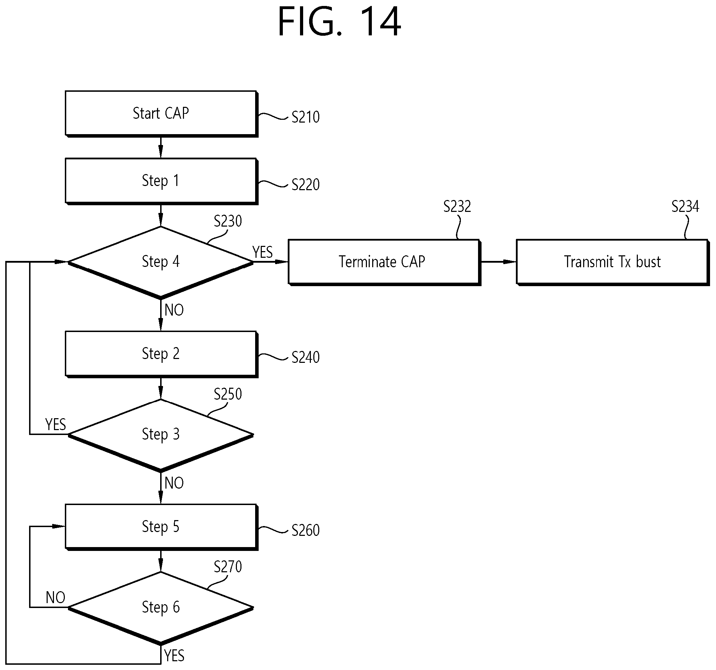

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration $T_d$. Then, if a counter N is zero, the UE may perform transmission (S234). In this case, the UE may adjust the counter N by sensing the channel for additional sensing slot duration(s) according to the following steps:

Step 1) (S220) The UE sets N to $N_{init}$ (N = $N_{init}$), where $N_{init}$ is a random number uniformly distributed between 0 and $CW_p$. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration $T_d$ or all the slots of the additional defer duration $T_d$ are detected to be idle.
Step 6) (S270) If the channel is sensed to be idle for all the slot durations of the additional defer duration $T_d$ (Y), step 4 proceeds. Otherwise (N), step 5 proceeds.

Table 8 shows that $m_p$, a minimum CW, a maximum CW, a maximum channel occupancy time (MCOT), and an allowed CW size, which are applied to the CAP, vary depending on channel access priority classes.

[Table 8]

| Channel Access Priority Class (p) | $m_p$ | $CW_{min,p}$ | $CW_{max,p}$ | $T_{ulmcot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 8, a contention window size (CWS), a maximum COT value, etc. for each CAPC may be defined. For example, $T_d$ may be equal to $T_f$ + $m_p$ * $T_{sl}$ ($T_d$ = $T_f$ + $m_p$ * $T_{sl}$).

The defer duration $T_d$ is configured in the following order: duration $T_f$ (16 us) + $m_p$ consecutive sensing slot durations $T_{sl}$ (9 us). $T_f$ includes the sensing slot duration $T_{sl}$ at the beginning of the 16 us duration.

The following relationship is satisfied: $CW_{min,p}$ <= $CW_p$ <= $CW_{max,p}$. $CW_p$ may be configured by $CW_p$ = $CW_{min,p}$ and updated before step 1 based on an explicit/implicit reception response for a previous UL burst (e.g., PUSCH) (CW size

update). For example, $CW_p$ may be initialized to $CW_{min,p}$ based on the explicit/implicit reception response for the previous UL burst. Alternatively, $CW_p$ may be increased to the next higher allowed value or maintained as it is.

(2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration $T_{short\_dl}$ = 25 us. Herein, $T_{short\_dl}$ includes the duration $T_f$ (=16 us) and one sensing slot duration immediately after the duration $T_f$. In the type 2A UL CAP, $T_f$ includes a sensing slot at the beginning thereof. In the type 2B UL CAP, the UE may perform transmission immediately after the channel is sensed to be idle for the sensing duration $T_f$ = 16 us. In the type 2B UL CAP, $T_f$ includes a sensing slot within 9 us from the end of the duration. In the type 2C UL CAP, the UE does not perform channel sensing before performing transmission.

For example, according to the type 1 LBT-based NR-U operation, the UE having uplink data to be transmitted may select a CAPC mapped to 5QI of data, and the UE may perform the NR-U operation by applying parameters of the corresponding CACP (e.g., minimum contention window size, maximum contention window size, $m_p$, etc.). For example, after selecting a random value between the minimum CW and the maximum CW mapped to the CAPC, the UE may select a backoff counter (BC) between zero and the random value. In this case, for example, the BC may be a positive integer less than or equal to the random value. The UE sensing a channel decreases the BC by 1 if the channel is idle. If the BC becomes zero and the UE detects that the channel is idle for the time $T_d$ ($T_d = T_f + m_p * T_{sl}$), the UE may attempt to transmit data by occupying the channel. If the UE attempting to transmit data detects a collision, the UE may increase the CW size mapped to the CAPC, and the UE may reselect a BC between zero and the increased CW. The UE that successfully transmits a packet may initialize the CW size (to the CW min).

For example, $T_{sl}$ (= 9 usec) is a basic sensing unit or sensing slots, and may include a measurement duration for at least 4 usec. For example, the front 9 usec of $T_f$ (= 16 usec) may be configured to be $T_{sl}$. For example, $m_p$ may be a constant mapped per CAPC and used in $T_d$ calculation. For example, a smaller value may be mapped to a lower CACP value (higher priority).

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 20 usec gap. The type 2A may be used to initiate transmission of SSB and non-unicast DL information. For example, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. For example, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

In a sidelink unlicensed band, the UE may perform a channel access operation based on Listen Before Talk (LBT). Before the UE accesses a channel in an unlicensed band, the UE should check whether the channel to be accessed is idle (e.g., a state in which UEs do not occupy the channel, a state in which UEs can access the corresponding channel and transmit data) or busy (e.g., a state in which the channel is occupied and data transmission/reception is performed on the corresponding channel, and the UE attempting to access the channel cannot transmit data while the channel is busy). For example, the operation in which the UE checks whether the channel is idle or busy may be referred to as Clear Channel Assessment (CCA), and the UE may check whether the channel is idle or busy for the CCA duration.

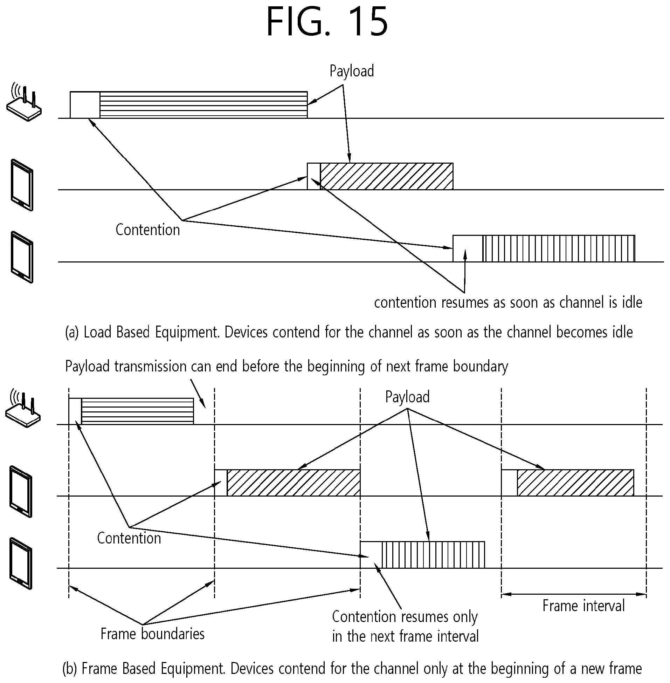

FIG. 15 shows a channel access procedure, based on an embodiment of the present disclosure. Specifically, (a) of FIG. 15 shows an example of a dynamic channel access procedure (load based equipment, LBE), and (b) of FIG. 15 shows an example of a semi-static channel access procedure (frame based equipment, FBE). The embodiment of FIG. 15 may be combined with various embodiments of the present disclosure.

Referring to (a) of FIG. 15, if a channel is idle, the UE may perform contention with other UEs on an unlicensed band to immediately occupy the channel. In addition, if the UE occupies the channel, the UE may transmit data.

Referring to (b) of FIG. 15, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins. The UE may perform type 2 series LBT operation within the FFP. For example, within the FFP, the UE may not perform random backoff-based LBT, and the UE may sense a channel for a short period of time and perform data transmission if the channel is idle.

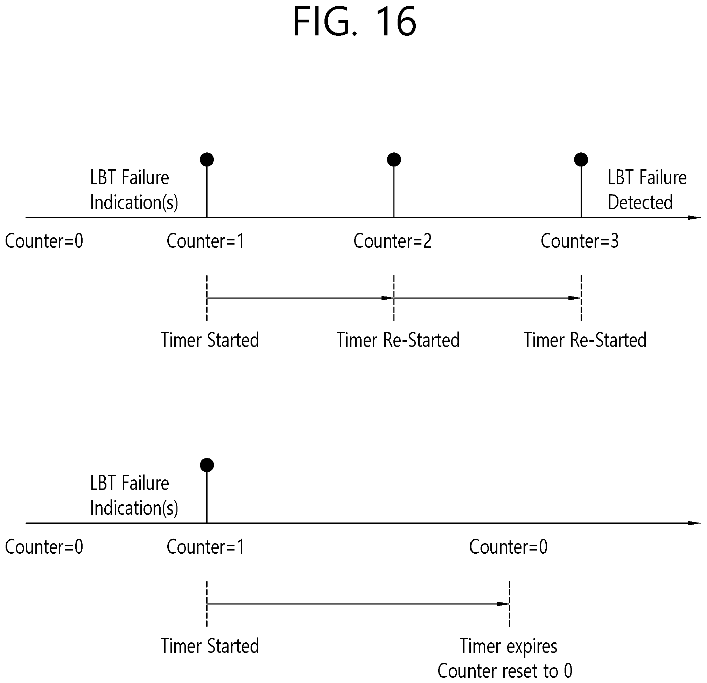

FIG. 16 shows a procedure related to LBT detection, based on an embodiment of the present disclosure. The embodiment of FIG. 16 may be combined with various embodiments of the present disclosure.

Referring to FIG. 16, for example, the lower layer may perform an (SL) LBT procedure. For example, the lower layer may perform an (SL) LBT procedure, see TS 37.213. For example, the lower layer may perform an (SL) LBT procedure, according to which a transmission is not performed by lower layers if the channel is identified as being occupied. For example, when lower layer performs an (SL) LBT procedure before a transmission and the transmission is not performed, an (SL) LBT failure indication is sent to the MAC entity from lower layers. For example, unless otherwise specified, when (SL) LBT procedure is performed for a transmission, actions as specified in this specification are performed regardless of if an (SL) LBT failure indication is received from lower layers. For example, when (SL) LBT is not performed by the lower layers, (SL) LBT failure indication is not received from lower layers.

For example, (sidelink) LBT failure detection and recovery procedure may be performed as follows.

For example, the MAC entity may be configured by RRC with a (SL) consistent LBT failure detection and recovery procedure. (SL) consistent LBT failure may be detected per RB set by counting (SL) LBT failure indications, for all (SL) transmissions, from the lower layers to the MAC entity.

For example, RRC may configure the following parameters in the (SL) LBT failure recovery configure (e.g., (sl-)lbt-FailureRecoveryConfig):

- (SL) LBT failure instance maximum count for the (SL) consistent LBT failure detection (e.g., (sl-)lbt-FailureInstance-MaxCount)
- (SL) LBT failure instance detection timer for the (SL) consistent LBT failure detection (e.g., (sl-)lbt-FailureDetectionTimer)
- (SL) LBT recovery timer for recovery of the triggered (SL) consistent LBT failure (e.g., (sl-)LBT-Recovery Timer)

The following UE variable is used for the SL consistent LBT failure detection procedure:

- SL_LBT_COUNTER (per RB set): counter for SL LBT failure indication which is initially set to 0.

For example, for (activated) (SL) BWP (e.g., configured with (sl-)lbt-FailureRecoveryConfig), the MAC entity may increment LBT_COUNTER (e.g., SL_LBT_COUNTER) for the RB set by 1. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, increment LBT_COUNTER (e.g., SL_LBT_COUNTER) for the RB set by 1. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, increment LBT_COUNTER (e.g., SL_LBT_COUNTER) for the RB set by 1.

For example, for (activated) (SL) BWP (e.g., configured with (sl-)lbt-FailureRecoveryConfig), the MAC entity may start or restart the (sl-)lbt-FailureDetectionTimer for the RB set. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (st-)lbt-FailureDetectionTimer for the RB set.

For example, for (activated) (SL) BWP (e.g., configured with (sl-)lbt-FailureRecoveryConfig), the MAC entity may trigger (SL) consistent LBT failure for the RB set in the (SL) BWP. For example, for (activated) (SL) BWP (e.g., configured with (sl-)lbt-FailureRecoveryConfig), the MAC entity may, if LBT_COUNTER (e.g., SL_LBT_COUNTER) >= (sl-)lbt-FailureInstanceMaxCount, trigger (SL) consistent LBT failure for the RB set in the (SL) BWP. For example, as shown in FIG. 16, for (activated) (SL) BWP (e.g., configured with (sl-)lbt-FailureRecoveryConfig), the MAC entity may, if LBT_COUNTER (e.g., SL_LBT_COUNTER) >= (sl-)lbt-FailureInstanceMaxCount, trigger (SL) consistent LBT failure for the RB set in the (SL) BWP.

For example, for (activated) (SL) BWP (e.g., configured with (sl-)lbt-FailureRecoveryConfig), the MAC entity may indicate (SL) consistent LBT failure based (sidelink) RLF detection for all destination IDs associated to unicast service to upper layers (e.g., RRC). For example, for (activated) (SL) BWP (e.g., configured with (sl-)lbt-FailureRecoveryConfig), the MAC entity may, if consistent LBT failure has been triggered in all the RB sets of the configured pool(s) of resources in the (SL) BWP, indicate (SL) consistent LBT failure based (sidelink) RLF detection for all destination IDs associated to unicast service to upper layers (e.g., RRC). For example, as shown in FIG. 16, for (activated) (SL) BWP (e.g., configured with (sl-)lbt-FailureRecoveryConfig), the MAC entity may, if consistent LBT failure has been triggered in all the RB sets of the configured pool(s) of resources in the (SL) BWP, indicate (SL) consistent LBT failure based (sidelink) RLF detection for all destination IDs associated to unicast service to upper layers (e.g., RRC).

For example, for (activated) (SL) BWP (e.g., configured with (sl-)lbt-FailureRecoveryConfig), the MAC entity may start or restart the (sl-)lbt-FailureDetectionTimer for the RB set. For example, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (sl-)lbt-FailureDetectionTimer for the RB set. For example, as shown in FIG. 16, for (activated) (SL) BWP (e.g., configured with (sl-)lbt-FailureRecoveryConfig), the MAC entity may, if (SL) LBT failure indication has been received from lower layers for an RB set of the configured pool(s) of resources in the (SL) BWP, start or restart the (st-)lbt-FailureDetectionTimer for the RB set.

For example, for (activated) (SL) BWP (e.g., configured with (sl-)lbt-FailureRecoveryConfig), the MAC entity may set LBT_COUNTER (e.g., SL_LBT_COUNTER) to 0 for the RB set. For example, for (activated) (SL) BWP (e.g., configured with (sl-)lbt-FailureRecoveryConfig), the MAC entity may, if all triggered (SL) consistent LBT failures are cancelled in an RB set, set LBT_COUNTER (e.g., SL_LBT_COUNTER) to 0 for the RB set. For example, for (activated) (SL) BWP (e.g., configured with (sl-)lbt-FailureRecoveryConfig), the MAC entity may, if the (sl-)lbt-FailureDetectionTimer expires for a RB set, set LBT_COUNTER (e.g., SL_LBT_COUNTER) to 0 for the RB set. For example, as shown in FIG. 16, for (activated) (SL) BWP (e.g., configured with (sl-)lbt-FailureRecoveryConfig), the MAC entity may, if all triggered (SL) consistent LBT failures are cancelled in an RB set, set LBT_COUNTER (e.g., SL_LBT_COUNTER) to 0 for the RB set. For example, as shown in FIG. 16, for (activated) (SL) BWP (e.g., configured with (sl-)lbt-FailureRecoveryConfig), the MAC entity may, if the (sl-)lbt-FailureDetectionTimer expires for a RB set, set LBT_COUNTER (e.g., SL_LBT_COUNTER) to 0 for the RB set.

For example, for (activated) (SL) BWP (e.g., configured with (sl-)lbt-FailureRecoveryConfig), the MAC entity may set LBT_COUNTER (e.g., SL_LBT_COUNTER) to 0 for all the RB sets. For example, for (activated) (SL) BWP (e.g., configured with (sl-)lbt-FailureRecoveryConfig), the MAC entity may, if (sl-)lbt-FailureDetectionTimer is reconfigured by upper layers, set LBT_COUNTER (e.g., SL_LBT_COUNTER) to 0 for all the RB sets. For example, for (activated) (SL) BWP (e.g., configured with (sl-)lbt-FailureRecoveryConfig), the MAC entity may, if (sl-)lbt-FailureInstanceMaxCount is reconfigured by upper layers, set LBT_COUNTER (e.g., SL_LBT_COUNTER) to 0 for all the RB sets. For example, as shown in FIG. 16, for (activated) (SL) BWP (e.g., configured with (sl-)lbt-FailureRecoveryConfig), the MAC entity may, if (sl-)lbt-FailureDetectionTimer is reconfigured by upper layers, set LBT_COUNTER (e.g., SL_LBT_COUNTER) to 0 for all the RB sets. For example, as shown in FIG. 16, for (activated) (SL) BWP (e.g., configured with (sl-)lbt-FailureRecoveryConfig), the MAC entity may, if (sl-)lbt-FailureInstanceMaxCount is reconfigured by upper layers, set LBT_COUNTER (e.g., SL_LBT_COUNTER) to 0 for all the RB sets.

In an unlicensed band, a UE may create or share (or receive) a shared channel occupancy time (shared COT) for sidelink data transmission as follows.

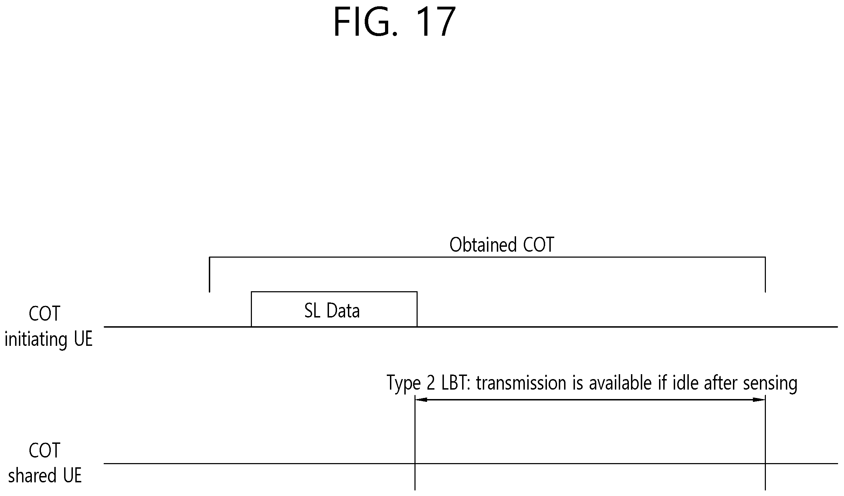

FIG. 17 shows an operation of a UE related to a shared COT, based on an embodiment of the present disclosure. The embodiment of FIG. 17 may be combined with various embodiments of the present disclosure.

Referring to FIG. 17, for example, a UE that creates a COT (e.g., a COT initiating UE) may share a COT secured by the UE with a peer UE. A UE that has created/secured a (shared) COT may transmit the secured (shared) COT to a peer UE through SCI or MAC CE or a PC5-RRC message. For example, when transmitting the secured (shared) COT through SCI, the UE may transmit the secured (shared) COT to a destination UE for a unicast link (e.g., a pair of L1 source ID and L1 destination ID), and may transmit the secured (shared) COT to a groupcast/broadcast destination UE (e.g., a groupcast/broadcast L1 destination ID). For example, when transmitting the secured (shared) COT through MAC CE (e.g., an SL channel occupancy time (COT) information MAC CE), the UE may transmit the secured (shared) COT to a destination UE for a unicast link (e.g., a pair of L1/L2 source ID and L1/L2 destination ID), and may transmit the secured (shared) COT to a groupcast/broadcast destination UE (e.g., a groupcast/broadcast L1/L2 destination ID). For example, a UE that has received a (shared) COT from a UE that created the (shared) COT (e.g., a COT responding UE) may perform a type 2 LBT operation after a transmission of the UE that created the (shared) COT is completed within the shared COT. For example, the type 2 LBT may include type 2A or type 2B LBT, in which, when it is confirmed that a channel is idle for a pre-configured time by performing a sensing operation, SL data to be transmitted by the UE may be transmitted within the shared COT. For example, type 2C LBT may transmit SL data immediately without sensing for a pre-configured time. For example, shared COT information transmitted by the COT initiating UE to the COT responding UE may include information on a shared COT duration, a shared COT starting offset, and an SL-CAPC value to be used by the COT responding UE.

For example, in FIG. 17 and the description related to FIG. 17, an embodiment in which a shared COT is shared from a peer UE is shown, but a UE may be configured with a shared COT to be used from a base station. For example, a transmitting UE for transmitting sidelink data may directly create a COT to be used, perform type 2 LBT within the COT, and transmit sidelink data within the created COT.

For example, resource (re)selection under MCSt, COT, and logical channel prioritization (LCP) restriction may be as follows.

A UE may perform a destination selection procedure in a logical channel prioritization (LCP) procedure by considering a channel access priority class (CAPC) value of sidelink (SL) data on sidelink grants, when the UE creates a plurality of sidelink grants within a COT created by the UE. For example, when the UE creates a plurality of sidelink grants within the COT created by the UE, if a CAPC value of SL data related to a trailing sidelink grant resource (e.g., a trailing sidelink grant in a time domain) is greater than a CAPC value of SL data related to a leading sidelink grant resource (e.g., a leading sidelink grant in a time domain), a resource reselection procedure of the trailing sidelink grant may be triggered. For example, after selecting an MCSt resource for a plurality of sidelink transport blocks (TBs), the UE may perform the destination selection procedure in the LCP procedure by considering a CAPC value of SL data for a sidelink grant on the MCSt.

For example, after selecting an MCSt resource for a plurality of sidelink TBs, a UE may perform a destination selection procedure in an LCP procedure by considering a CAPC value of SL data on a sidelink grant for the MCSt. For example, when the UE has selected the MCSt resource for the plurality of sidelink TBs, if a CAPC value of SL data related to a trailing sidelink grant resource is greater than a CAPC value of SL data on a leading sidelink grant resource, a resource reselection procedure of the trailing sidelink grant may be triggered.

For example, when a UE creates a plurality of sidelink grants within a COT created by the UE, the UE may perform a destination selection procedure in an LCP procedure by considering a CAPC value of SL data on the sidelink grants.

For example, when a UE creates a plurality of sidelink grants within a COT created by the UE, if a CAPC value of SL data related to a trailing sidelink grant resource (e.g., a trailing sidelink grant in a time domain) is greater than a CAPC value of SL data on a leading sidelink grant resource (e.g., a leading sidelink grant in a time domain), a resource reselection procedure of the trailing sidelink grant may be triggered.

For example, after selecting an MCSt resource for a plurality of sidelink TBs, a UE may perform a destination selection procedure in an LCP procedure by considering a CAPC value of SL data on a sidelink grant for the MCSt.

For example, when a UE has selected an MCSt resource for a plurality of sidelink TBs, if a CAPC value of SL data related to a trailing sidelink grant resource (e.g., a trailing sidelink grant in a time domain) is greater than a CAPC value of SL data on a leading sidelink grant resource (e.g., a leading sidelink grant in a time domain), a resource reselection procedure of the trailing sidelink grant may be triggered.

For example, in SL-U, a UE may need to occupy a channel of a sidelink unlicensed band in order to transmit SL data. For example, to occupy the channel of the sidelink unlicensed band, the UE may perform listen before talk (LBT) (e.g., type 1 LBT: random backoff-based LBT) to perform a process of finding a channel of the unlicensed band that is not occupied by the UE. For example, when the UE performing LBT finds a channel that is not occupied by other UEs, the UE may occupy the channel and perform transmission of SL data. For example, if the UE fails the LBT process, the UE may adjust a parameter value for performing LBT (e.g., adjustment of a contention window size) to re-perform LBT and continuously perform the process of finding a channel of the unlicensed band that is not occupied by the UE.

For example, in the present disclosure, when sidelink LBT (e.g., one-shot LBT or consistent LBT) fails (e.g., failure in the process of finding an unoccupied channel), an operation for resource (re-)selection of a UE may be proposed as follows.

For example, when a transmitting UE has already created a sidelink grant for logical channel data (e.g., or MAC CE or a PC5 RRC message), the following resource (re-)creation/selection operation (e.g., or grant (re-)creation) may be proposed.

For example, when a transmitting UE has already created a sidelink grant for logical channel data (e.g., or MAC CE or a PC5 RRC message), if a sidelink consistent LBT failure occurs in all configured normal pool(s) and/or exceptional pool(s) (e.g., or all RB sets belonging to all normal pool(s) and/or all RB sets belonging to the exceptional pool(s)) in which a PSFCH resource to which the sidelink grant belongs is configured, the transmitting UE may clear the sidelink grant. For example, and/or the transmitting UE may omit packet transmission based on the cleared sidelink grant. For example, and/or the transmitting UE may switch a HARQ feedback option for TB transmission from HARQ feedback enabled to HARQ feedback disabled.

For example, according to an embodiment of the present disclosure, when a transmitting UE has already created a sidelink grant for logical channel data (e.g., or MAC CE or a PC5 RRC message), if a sidelink consistent LBT failure occurs in all configured normal pool(s) (e.g., or all RB sets belonging to all normal pool(s)) in which a PSFCH resource to which the sidelink grant belongs is configured, the transmitting UE may clear the sidelink grant. For example, and/or the UE may select an exceptional pool in which PSFCH is configured (e.g., exceptionally) and may create a sidelink grant in the exceptional pool.

For example, according to an embodiment of the present disclosure, when a transmitting UE has not created a sidelink grant for logical channel data (e.g., or MAC CE or a PC5 RRC message), if a sidelink consistent LBT failure occurs in all normal pool(s) in which PSFCH is configured, the UE may select an exceptional pool in which PSFCH is configured (e.g., exceptionally) and may create a sidelink grant in the exceptional pool.

For example, the proposals described above may be similarly extended and applied even when a UE performs an operation based on multiple consecutive slot transmission (MCSt) in sidelink (e.g., a UE operation when an MCSt resource is allocated).

For example, in MCSt, sidelink slots less than or equal to a pre-configured gap may be consecutively allocated as transmission resources for sidelink transmission, and a same sidelink TB or a plurality of sidelink TBs may be transmitted using multiple consecutive slots. For example, in MCSt, a UE may perform LBT in a first slot, and may transmit a sidelink TB without performing LBT for sidelink TBs transmitted through subsequently consecutive slots (e.g., consecutive slots less than or equal to the pre-configured gap). For example, when performing an MCSt-based sidelink transmission, sidelink data may be transmitted without performing LBT during a gap between consecutive slots for sidelink transmission, thereby providing an effect of reducing overhead (e.g., performing LBT) of a transmission operation in a sidelink unlicensed band.

For example, in a sidelink unlicensed band (e.g., SL-U (sidelink-unlicensed)), a transmitting UE performing sidelink communication may perform an LBT operation to occupy a channel of the unlicensed band. For example, when the UE succeeds in LBT, the UE may transmit a packet on the occupied channel. For example, if LBT fails (e.g., when a result that a channel is busy is obtained as a result of sensing performed by the UE during a sensing slot duration), the UE cannot perform sidelink transmission because the UE has not occupied the channel of the unlicensed band.

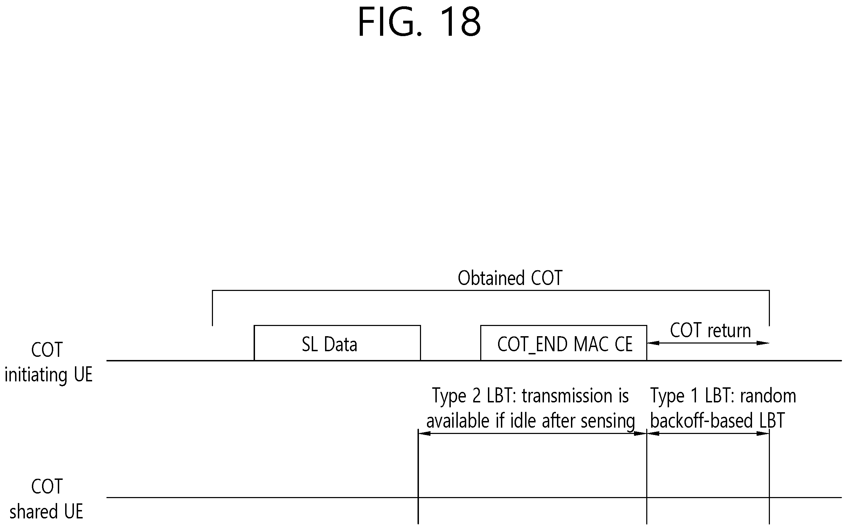

FIG. 18 shows an operation of a UE related to COT return, based on an embodiment of the present disclosure. The embodiment of FIG. 18 may be combined with various embodiments of the present disclosure.

Referring to FIG. 18, for example, according to an embodiment of the present disclosure, an operation in which a UE that created a COT (e.g., a COT initiating UE) may return a COT secured by the UE may be proposed. For example, a UE that has created and secured a COT and shared the COT with a peer UE (e.g., a COT initiating UE) may transmit a COT END MAC CE to the peer UE in order to return the secured COT. For example, the COT END MAC CE may be transmitted to a destination UE for a unicast link (e.g., a pair of L1/L2 source ID and L1/L2 destination ID), and may be transmitted to a groupcast/broadcast destination UE (e.g., a groupcast/broadcast L1/L2 destination ID). For example, a UE that has received the COT END MAC CE may transmit SL data by performing type 1 LBT from a time at which the COT END MAC CE is received until an expiration time of a previously shared COT. For example, until the COT END MAC CE is received, a UE that has received the COT may transmit SL data by performing type 2 LBT within the shared COT until the COT expires.

For example, COT return may be possible not only through MAC CE but also through SCI or a PC5-RRC message. For example, COT return may be transmitted to a destination UE for a unicast link (e.g., a pair of L1 source ID and L1 destination ID), and may be transmitted to a groupcast/broadcast destination UE (e.g., a groupcast/broadcast L1 destination ID).

For example, an SL-CAPC applied by a sidelink UE to perform LBT in a sidelink unlicensed band may be defined as follows.

- For example, an SL-CAPC mapped for each data traffic type corresponding to the SL-CAPC may be defined.
- For example, a contention window size (CWS) and a maximum COT value for each SL-CAPC may be defined.
- For example, SL-CAPC 1 (e.g., a class having a highest priority): a contention window size (CWS) may be configured to be a smallest value among SL-CAPCs. For example, since the contention window size (CWS) is the smallest, a least amount of time may be required until occupying a channel. For example, a least amount of time may be consumed for clear channel assessment (e.g., a process of determining whether a channel is busy or idle).
- SL-CAPC 2
- SL-CAPC 3
- For example, SL-CAPC 4 (e.g., a class having a lowest priority): a contention window size (CWS) may be configured to be a largest value among SL-CAPCs. For example, since the contention window size (CWS) is the largest, a longest amount of time may be required until occupying a channel. For example, a largest amount of time may be consumed for clear channel assessment (e.g., a process of determining whether a channel is busy or idle).

For example, SL-CAPC may be defined to be mapped to PQI as shown in Table 9. For example, a plurality of SL-CAPC values may be defined to be mapped to a same PQI, and a same SL-CAPC may be mapped to different PQIs.

[Table 9]

| PQI Value | Resource Type | SL-CAPC | Default Priority Level | Packet Delay Budget | Packet Error Rate | Default Maximum Data Burst Volume | Default Averaging Window | Example Services |
|---|---|---|---|---|---|---|---|---|
| 21 | GBR | 1,2 | 3 | 20 ms | $10^{-4}$ | N/A | 2000 ms | Platooning between UEs - Higher degree of automation; Platooning between UE and RSU - Higher degree of automation |
| 22 | (NOTE 1) | 2,3 | 4 | 50 ms | $10^{-2}$ | N/A | 2000 ms | Sensor sharing - higher degree of automation |
| 23 | | 2,3 | 3 | 100 ms | $10^{-4}$ | N/A | 2000 ms | Information sharing for automated driving - between UEs or UE and RSU - higher degree of automation |
| 55 | Non-GBR | 1,2 | 3 | 10 ms | $10^{-4}$ | N/A | N/A | Cooperative lane change - higher degree of automation |
| 56 | | 3, 4 | 6 | 20 ms | $10^{-1}$ | N/A | N/A | Platooning informative exchange - low degree of automation; Platooning - information sharing with RSU |
| 57 | | 3, 4 | 5 | 25 ms | $10^{-1}$ | N/A | N/A | Cooperative lane change - lower degree of automation |
| 58 | | 2,3 | 4 | 100 ms | $10^{-2}$ | N/A | N/A | Sensor information sharing - lower degree of automation |

(continued)

| PQI Value | Resource Type | SL-CAPC | Default Priority Level | Packet Delay Budget | Packet Error Rate | Default Maximum Data Burst Volume | Default Averaging Window | Example Services |
|---|---|---|---|---|---|---|---|---|
| 59 | | 3, 4 | 6 | 500 ms | $10^{-1}$ | N/A | N/A | Platooning - reporting to an RSU |
| 90 | Delay Critical GBR | 1, 2 | 3 | 10 ms | $10^{-4}$ | 2000 bytes | 2000 ms | Cooperative collision avoidance; Sensor sharing - Higher degree of automation; Video sharing - higher degree of automation |
| 91 | (NOTE 1) | 1, 2 | 2 | 3 ms | $10^{-5}$ | 2000 bytes | 2000 ms | Emergency trajectory alignment; Sensor sharing - Higher degree of automation |
| | NOTE 1: GBR and Delay Critical GBR PQIs can only be used for unicast PC5 communications. | | | | | | | |

For example, SL-CAPC (e.g., an SL-CAPC that a UE immediately uses) may be configured by a base station and transmitted to the UE (e.g., via PDCCH), and may be predefined so that out-of-coverage UEs can use the SL-CAPC.

For example, when available sidelink data occurs on a logical channel, a transmitting UE may perform a logical channel prioritization procedure (e.g., a procedure of selecting, among available logical channel data, logical channel data having a highest sidelink priority (e.g., or destination or destination layer-2 ID or SUD), and generating a MAC PDU only with the selected logical channel data), thereby performing a multiplexing procedure for sidelink logical channel data (e.g., MAC SDUs) to generate a MAC PDU.

For example, when a transmitting UE completes a MAC PDU generation operation, the transmitting UE may perform an operation of occupying a channel of a sidelink unlicensed band in order to transmit the generated MAC PDU. For example, the transmitting UE may perform a sidelink LBT operation to find an idle channel, occupy the channel, and transmit the generated MAC PDU (e.g., or a transport block) to a peer UE through the occupied channel.

For example, according to the present disclosure, after a COT initiating UE shares a COT with a COT responding UE and then retrieves the shared COT, an unlicensed-band operation of the COT responding UE may be proposed as follows.

For example, the COT initiating UE may retrieve the shared COT from the COT responding UE through SCI or MAC CE or a PC5-RRC message.

For example, a signal transmitted by the COT initiating UE for COT retrieval may include the following information and may be transmitted to the COT responding UE.

1) For example, an SL CAPC value used by the COT initiating UE for type 1 LBT (e.g., or type 2 LBT) in a COT that is retrieved by the COT initiating UE.

- (e.g., purpose of indication of an SL CAPC value) The COT responding UE may continue to perform type 2 LBT within a shared COT already received from the COT initiating UE and may perform sidelink data transmission by applying enhanced LCP, when a representative SL CAPC value of logical channel data of the COT responding UE is less than or equal to (e.g., or greater than or equal to) the SL CAPC value included in the COT retrieval signal of the COT initiating UE. For example, the enhanced LCP may refer to the following UE operation. For example, when the COT responding UE receives shared COT information from the COT initiating UE, the COT responding UE may filter only logical channel data whose destination layer-2 ID is the same as a source layer-2 ID of the COT initiating UE, and may generate a MAC PDU. For example, and/or when the COT responding UE receives shared COT information (e.g., and/or a COT retrieval signal) from the COT initiating UE, the COT responding UE may filter only logical channel data whose representative SL CAPC value is less than or equal to an SL CAPC value indicated in the shared COT (e.g., or the COT retrieval signal), and may generate a MAC PDU. For example, and/or when the COT responding UE has a generated sidelink grant, the COT responding UE may use the shared COT (e.g., or the retrieved COT) only when a resource of the generated sidelink grant exists within a COT duration of the shared COT (e.g., or the retrieved COT).

2) For example, SL priority value(s) related to PSSCH(s) to be transmitted in the retrieved COT.
3) For example, a COT duration retrieved by the COT initiating UE (e.g., when only a part of a shared COT is retrieved).

For example, when the COT responding UE receives a COT retrieval signal from the COT initiating UE after generating a MAC PDU based on enhanced LCP, the COT responding UE may perform the following operation. (e.g., since enhanced LCP is applied, this may be a case in which a generated sidelink grant exists within a COT duration.)

- Operation option 1: For example, when the COT responding UE receives a COT retrieval signal (e.g., SCI) from the COT initiating UE, the COT responding UE may fall back to a legacy LCP procedure (e.g., an existing MAC PDU generation procedure in which enhanced LCP is not applied) and may perform a channel access operation based on type 1 LBT in a remaining COT (e.g., a remaining COT duration that has not yet been used). For example, remaining generated sidelink grants may be discarded or may continue to be used for MAC PDU transmission based on the legacy LCP procedure. For example, when the COT responding UE generates a new sidelink grant, the COT responding UE may perform a resource selection operation based on inter-UE LBT blocking. For example, when the COT responding UE receives a COT retrieval signal (e.g., or a COT retrieval signal + sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.
- Operation option 2: For example, when the COT responding UE receives a COT retrieval signal (e.g., SCI) from the COT initiating UE, the COT responding UE may apply enhanced LCP to generate a MAC PDU during a remaining COT (e.g., a remaining COT duration that has not yet been used), and may also apply channel access based on type 2 LBT during the remaining COT. For example, the enhanced LCP may refer to the following UE operation. For example, when the COT responding UE receives shared COT information from the COT initiating UE, the COT responding UE may filter only logical channel data whose destination layer-2 ID is the same as a source layer-2 ID of the COT initiating UE, and may generate a MAC PDU. For example, and/or when the COT responding UE receives shared COT information (e.g., and/or a retrieved COT) from the COT initiating UE, the COT responding UE may filter only logical channel data whose representative SL CAPC value is less than or equal to an SL CAPC value indicated in the shared COT (e.g., and/or the retrieved COT), and may generate a MAC PDU. For example, and/or when the COT responding UE has a generated sidelink grant, the COT responding UE may use the shared COT (e.g., and/or the retrieved COT) only when a resource of the generated sidelink grant exists within a COT duration of the shared COT (e.g., and/or the retrieved COT).

For example, according to an embodiment of the present disclosure, when the COT responding UE receives a COT retrieval signal from the COT initiating UE before generating a MAC PDU based on enhanced LCP, the COT responding UE may perform the following operation.

1) For example, when the COT responding UE has already generated a sidelink grant, and the generated sidelink grant is a sidelink grant that is not included in a COT duration of a received shared COT (e.g., and/or a retrieved COT), the COT responding UE may perform the following operation. For example, the COT responding UE may perform a legacy LCP procedure during a remaining COT (e.g., a remaining COT duration that has not yet been used), and may perform a channel access procedure based on type 1 LBT. For example, and/or the generated sidelink grant may be transmitted by a MAC PDU generated based on the legacy LCP. For example, when the COT responding UE generates a new sidelink grant, the COT responding UE may perform a resource selection operation based on inter-UE LBT blocking. For example, when the COT responding UE receives a COT retrieval signal (e.g., or a COT retrieval signal + sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

2) For example, when the COT responding UE has already generated a sidelink grant, and the generated sidelink grant is a sidelink grant that is included in a COT duration of a received shared COT, the COT responding UE may perform the following operation.

- Operation 1): For example, the COT responding UE may perform a legacy LCP procedure during a remaining COT (e.g., a remaining COT duration that has not yet been used), and may perform a channel access procedure based on type 1 LBT. For example, and/or the generated sidelink grant may be transmitted by a MAC PDU generated based on the legacy LCP. For example, when the COT responding UE generates a new sidelink grant, the COT responding UE may perform a resource selection operation based on inter-UE LBT blocking. For example, when the COT responding UE receives a COT retrieval signal (e.g., or a COT retrieval signal + sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

- Operation 2): For example, when a representative SL CAPC value of logical channel data of the COT responding UE is less than or equal to (e.g., or greater than or equal to) an SL CAPC value included in a COT retrieval signal of the COT initiating UE, the COT responding UE may continue to perform type 2 LBT within a shared COT already received from the COT initiating UE, and may perform sidelink data transmission by applying enhanced LCP. For example, the enhanced LCP may refer to the following UE operation. For example, when the COT responding UE receives shared COT information from the COT initiating UE, the COT responding UE may filter only logical channel data whose destination layer-2 ID is the same as a source layer-2 ID of the COT initiating UE, and may generate a MAC PDU. For example, and/or when the COT responding UE receives shared COT information (e.g., and/or a retrieved COT) from the COT initiating UE, the COT responding UE may filter only logical channel data whose representative SL CAPC value is less than or equal to an SL CAPC value indicated in the shared COT (e.g., and/or the retrieved COT), and may generate a MAC PDU. For example, and/or when the COT responding UE has a generated sidelink grant, the COT responding UE may use the shared COT (e.g., and/or the retrieved COT) only when a resource of the generated sidelink grant exists within a COT duration of the shared COT (e.g., and/or the retrieved COT). For example, when the COT responding UE generates a new sidelink grant, the COT responding UE may perform a resource selection operation based on inter-UE LBT blocking.

- Operation 3): For example, when the COT responding UE receives a COT retrieval-related signal (e.g., sidelink data) from the COT initiating UE before generating a sidelink grant, the COT responding UE may perform the following operation. For example, the COT responding UE may generate a MAC PDU based on a legacy LCP procedure during a remaining COT duration. For example, and/or the COT responding UE may perform a channel access procedure based on type 1 LBT. For example, and/or the COT responding UE may determine whether to generate a sidelink grant included in a remaining COT duration or a sidelink grant not included in the remaining COT duration during sidelink grant generation, based on UE implementation. For example, when the COT responding UE generates a new sidelink grant, the COT responding UE may perform a resource selection operation based on inter-UE LBT blocking. For example, when the COT responding UE receives a COT retrieval-related signal (e.g., sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

For example, according to an embodiment of the present disclosure, the COT initiating UE may retrieve a COT shared with the COT responding UE without a COT retrieval signal. For example, when the COT responding UE receives sidelink data (e.g., PSCCH and PSSCH) from the COT initiating UE during a shared COT duration, the COT responding UE may consider that the COT initiating UE has retrieved the shared COT. For example, in the following embodiments, UE procedures may be proposed when the COT initiating UE retrieves a shared COT without COT retrieval signaling.

1) For example, when the COT responding UE receives shared COT information (e.g., and/or a retrieved COT) from the COT initiating UE and generates a MAC PDU based on enhanced LCP, and then detects COT retrieval (e.g., determining COT retrieval by detecting PSCCH/PSSCH of the COT initiating UE within a COT duration) (e.g., since enhanced LCP is applied, this may be a case in which a generated sidelink grant is included within the COT duration).

- Operation option 1: For example, when the COT responding UE detects PSCCH/PSSCH of the COT initiating UE within a COT duration, the COT responding UE may fall back to a legacy LCP procedure in a remaining COT and may perform channel access based on type 1 LBT. For example, remaining sidelink grants may be discarded or may continue to be used for MAC PDU transmission based on the legacy LCP, and newly generated grants may perform a resource selection operation based on inter-UE LBT blocking (e.g., option 1: the UE may avoid selecting N consecutive resource(s) before a reserved resource having a higher layer-1 sidelink priority).
- Operation option 2: For example, even when the COT responding UE detects PSCCH/PSSCH of the COT initiating UE within a COT duration (e.g., when the COT responding UE has a higher priority), the COT responding UE may maintain enhanced LCP and type 2 LBT during a remaining COT, and newly generated grants may perform a resource selection operation based on inter-UE LBT blocking (e.g., option 1: the UE may avoid selecting N consecutive resource(s) before a reserved resource having a higher layer-1 sidelink priority).

For example, when the COT responding UE receives sidelink data (e.g., PSCCH + PSSCH) from the COT initiating UE during a remaining COT duration after generating a MAC PDU based on enhanced LCP, the COT responding UE may perform the following operation. (e.g., since enhanced LCP is applied, this may be a case in which a generated sidelink grant exists within the COT duration.)

- Operation option 1: For example, when the COT responding UE receives sidelink data (e.g., PSCCH + PSSCH) from the COT initiating UE during a remaining COT duration, the COT responding UE may fall back to a legacy LCP procedure and may perform channel access based on type 1 LBT in a remaining COT. For example, remaining generated sidelink grants may be discarded or may continue to be used for MAC PDU transmission based on the legacy LCP. For example, when the COT responding UE generates a new sidelink grant, the COT responding UE may perform a resource selection operation based on inter-UE LBT blocking. For example, when the COT responding UE receives sidelink data (e.g., PSCCH + PSSCH) from the COT initiating UE during a remaining COT duration, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.
- Operation option 2: For example, when the COT responding UE receives sidelink data (e.g., PSCCH + PSSCH) from the COT initiating UE during a remaining COT duration, the COT responding UE may apply enhanced LCP to generate a MAC PDU and may apply channel access based on type 2 LBT during the remaining COT. For example, the enhanced LCP may refer to the following UE operation. For example, when the COT responding UE receives shared COT information from the COT initiating UE, the COT responding UE may filter only logical channel data whose destination layer-2 ID is the same as a source layer-2 ID of the COT initiating UE, and may generate a MAC PDU. For example, and/or when the COT responding UE receives shared COT information (e.g., and/or a retrieved COT) from the COT initiating UE, the COT responding UE may filter only logical channel data whose representative SL CAPC value is less than or equal to an SL CAPC value indicated in the shared COT (e.g., and/or the retrieved COT), and may generate a MAC PDU. For example, and/or when the COT responding UE has a generated sidelink grant, the COT responding UE may use the shared COT (e.g., and/or the retrieved COT) only when a resource of the generated sidelink grant exists within a COT duration of the shared COT (e.g., and/or the retrieved COT).

2) For example, when the COT responding UE detects COT retrieval (e.g., determining COT retrieval by detecting PSCCH/PSSCH of the COT initiating UE within a COT duration) before generating a MAC PDU based on enhanced LCP.

- Operation 1): For example, when the COT responding UE has already generated a sidelink grant (e.g., a grant not included in a COT duration), the COT responding UE may perform a legacy LCP procedure and/or a channel access procedure based on type 1 LBT during a remaining COT. For example, and/or the generated sidelink grant may be transmitted by a MAC PDU generated based on the legacy LCP. For example, when the COT responding UE generates a new sidelink grant, the COT responding UE may perform a resource selection operation based on inter-UE LBT blocking. For example, when the COT responding UE receives a COT retrieval signal (e.g., or a COT retrieval signal + sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

- Operation 2): For example, when the COT responding UE has already generated a sidelink grant (e.g., a grant included in a COT duration), the COT responding UE may perform a legacy LCP procedure and/or a channel access procedure based on type 1 LBT during a remaining COT. For example, and/or the generated sidelink grant may be transmitted by a MAC PDU generated based on the legacy LCP. For example, when the COT responding UE generates a new sidelink grant, the COT responding UE may perform a resource selection operation based on inter-UE LBT blocking. For example, when the COT responding UE receives a COT retrieval signal (e.g., or a COT retrieval signal + sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

- Operation 3): For example, when the COT responding UE receives a COT retrieval-related signal (e.g., sidelink data) from the COT initiating UE before creating a sidelink grant, the COT responding UE may perform the following operation. For example, the COT responding UE may generate a MAC PDU based on a legacy logical channel prioritization (LCP) procedure during a remaining COT duration. For example, and/or the COT responding UE may perform a channel access procedure based on type 1 listen before talk (LBT). For example, and/or the COT responding UE may determine, during sidelink grant generation, whether to generate a sidelink grant that is included in the remaining COT duration or to generate a sidelink grant that is not included in the remaining COT duration, based on UE implementation. For example, and/or the COT responding UE may generate a sidelink grant that is included in the remaining COT duration. For example, and/or the COT responding UE may generate a sidelink grant that is not included in the remaining COT duration. For example, when the COT responding UE generates a new sidelink grant, the COT responding UE may perform a resource selection operation based on inter-UE LBT blocking. For example, when the COT responding UE receives a COT retrieval-related signal (e.g., sidelink data) from the COT initiating UE, or receives PSCCH/PSSCH (e.g., SCI + data) transmitted using the retrieved COT, the COT responding UE may exclude N consecutive resource(s) prior to a resource timing reserved by the COT initiating UE through SCI from resource selection. For example, such an inter-UE LBT blocking-based resource exclusion operation may be limited to a case in which a sidelink priority (layer-1) of transmission data of the COT initiating UE is higher than (e.g., or lower than) a sidelink priority (layer-1) of logical channel data of the COT responding UE.

Enhanced LCP determination based on CAPC in SCI may not accurately reflect real-time network conditions of a base station through DCI. This may slow adaptation to traffic load and network congestion and may negatively affect network performance. In addition, as a network becomes larger, managing enhanced LCP based on CAPC in SCI may become increasingly complex and may have reduced scalability. Enhanced LCP management by a base station based on a centralized management role of CAPC information of the base station may be essential to maintain performance and scalability in a larger network. In addition, managing enhanced LCP without coordination of the base station may increase interference and collision rates. A UE may not have an overall view of a network state and other ongoing transmissions, and thus, unlike a base station, may cause more interference and collisions.

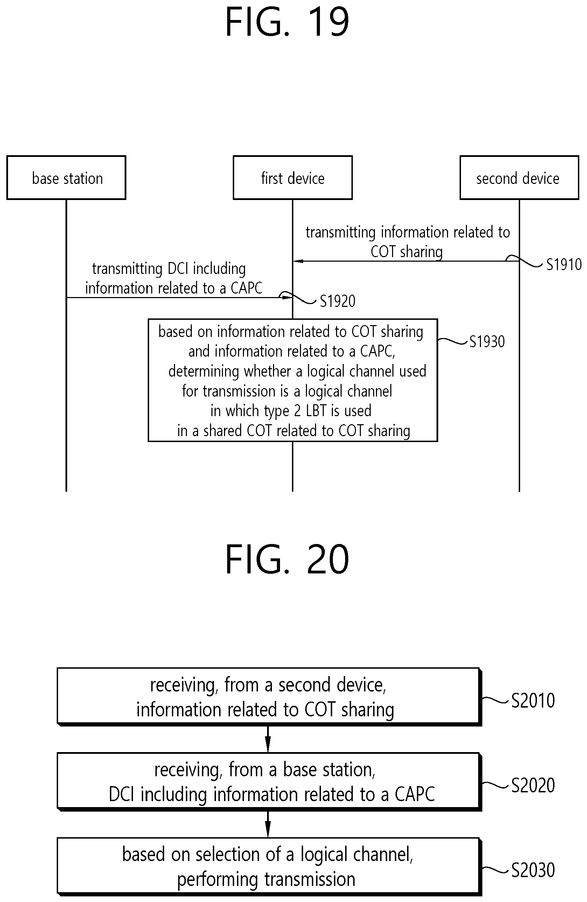

FIG. 19 shows a procedure related to a UE related to a shared COT, based on an embodiment of the present disclosure. The embodiment of FIG. 19 may be combined with various embodiments of the present disclosure.

Referring to FIG. 19, in step S1910, a second device may transmit information related to COT sharing to a first device. For example, when a COT responding UE receives sidelink data (PSCCH + PSSCH) from a COT initiating UE within a remaining COT duration (e.g., a remaining COT duration that has not yet been used), the COT responding UE may apply enhanced LCP to generate a MAC PDU and may apply channel access based on type 2 LBT during the remaining COT. Here, the enhanced LCP may refer to the following UE operation. For example, when the COT responding UE receives shared COT information from the COT initiating UE, the COT responding UE may filter only logical channel data whose destination layer-2 ID is the same as a source layer-2 ID of the COT initiating UE and may generate a MAC PDU. And/or, when the COT responding UE receives shared COT information (and/or a retrieved COT) from the COT initiating UE, the COT responding UE may filter only logical channel data whose representative SL CAPC value is less than or equal to an SL CAPC value indicated in the shared COT (and/or the retrieved COT) and may generate a MAC PDU. And/or, when the COT responding UE has a generated sidelink grant, the COT responding UE may use the shared COT (and/or the retrieved COT) only when a resource of the generated sidelink grant exists within a COT duration of the shared COT (and/or the retrieved COT). In step S1920, a base station may transmit DCI including information related to CAPC to the first device. For example, the first device may be a mode 1 UE (e.g., a resource allocation mode 1 UE). For example, the mode 1 UE may receive, from the base station through mode 1 DCI, an indication of a sidelink CAPC value to be applied (e.g., for a specific logical channel). In step S1930, the first device may determine, based on the information related to COT sharing and the information related to CAPC, whether a logical channel used for transmission is a logical channel in which type 2 LBT is used. For example, when a COT responding UE is configured with an SL CAPC value of "1" through mode 1 DCI from the base station, the COT responding UE may apply legacy LCP without applying enhanced LCP (e.g., for the corresponding or a specific logical channel), may generate a MAC PDU, or may perform a channel access operation based on type 1 LBT, and may not use a shared COT.

For example, in the present disclosure, the following operation in which a mode 1 UE may use enhanced LCP may be proposed.

For example, a mode 1 UE (e.g., a resource allocation mode 1 UE) may receive, from a base station through mode 1 DCI, an indication of a sidelink CAPC value to be applied (e.g., for a specific logical channel). For example, when the base station desires to apply legacy LCP without applying enhanced LCP for a specific logical channel, the base station may indicate a sidelink CAPC value as a lowest SL CAPC value (e.g., an SL CAPC value of "1") (e.g., for the specific logical channel). For example, a representative SL CAPC value of logical channel data of a COT responding UE may be "2". For example, a COT initiating UE may indicate an SL CAPC value of "3" when transmitting a shared COT to the COT responding UE. For example, when the COT responding UE is configured with an SL CAPC value of "1" through mode 1 DCI from the base station, the COT responding UE may apply legacy LCP without applying enhanced LCP (e.g., for the corresponding or a specific logical channel), may generate a MAC PDU, or may perform a channel access operation based on type 1 LBT, and may not use a shared COT.

For example, when the COT responding UE receives shared COT information from the COT initiating UE, the COT responding UE may filter only logical channel data whose representative SL CAPC value is less than or equal to an SL CAPC value indicated in the shared COT and may generate a MAC PDU.

For example, UE to UE COT sharing may be supported in NR sidelink operation for SL-U. For example, when performing SL-SSB transmission(s), a responding UE may utilize a COT shared by a COT initiating UE when the responding UE intends to transmit SL-SSB in the shared COT.

For example, when performing PSFCH transmissions, a responding UE may utilize a COT shared by a COT initiating UE when at least one of the responding UE's PSFCH transmissions is intended for the COT initiating UE.

For example, in order to satisfy the COT sharing requirements, a responding UE may perform an enhanced LCP procedure. For example, when receiving multiple COT sharing indications from different COT initiators, it may be up to UE implementation which shared COT is used.

For example, the MAC entity may need to perform each SCI corresponding to a new transmission:

For example, if COT sharing information has been received from lower layers:

For example, if resources used for initial transmission for the SL grant associated to the SCI are within the COT duration and MAC entity decides to use shared COT with type-2 LBT:

For example, the MAC entity may select a Destination associated to one of unicast, groupcast and broadcast that satisfy the following destination condition and CAPC condition, and having at least one of the MAC CE and the logical channel with the highest priority, among the logical channels that satisfy all the following conditions and the MAC CE(s) that satisfies CAPC and destination requirement, if any, for the SL grant associated to the SCI:

For example, if a Source Layer-1 ID and a Destination Layer-1 ID contained in the COT initiator's SCI or COT sharing information match to the 8 LSB of the corresponding Destination Layer-2 ID and the 16 LSB of a Source Layer-2 IDs relating to the transmission from the responding UE and the cast type indicator in the SCI is set to unicast; or if a Destination Layer-1 ID contained in the COT initiator's SCI or COT sharing information matches to the 16 LSB of a Destination Layer-2 ID relating to the transmission from the responding UE and the cast type indicator in the SCI is set to groupcast or broadcast; and

For example, if a CAPC value of the SL data has an equal or smaller CAPC value than a CAPC value indicated in the COT sharing information; and

For example, if SL data is available for transmission.

For example, SCI format 1 may include COT sharing flag. For example, SCI format 1-A may include COT sharing flag. For example, SCI format 1-A may include COT sharing flag. For example, SCI format 1-A may include COT sharing flag.

For example, in the SCI format 2, if the 'COT sharing flag' field in SCI format 1-A is present and set to '1', CAPC can be set. For example, in the SCI format 2-A, if the 'COT sharing flag' field in SCI format 1-A is present and set to '1', CAPC can be set.

Determining enhanced logical channel prioritization (LCP) by using CAPC in downlink control information (DCI) allows a base station to centrally manage traffic priorities across an entire network. This can ensure consistent and efficient traffic prioritization, thereby improving overall network performance. In addition, the base station may provide updates on real-time network conditions through DCI. Enhanced LCP determination based on CAPC allows a network to quickly adapt to changes in traffic load and congestion, thereby maintaining optimal performance. In addition, centralized control through the base station may help manage interference more effectively. Enhanced LCP determination based on CAPC may reduce a possibility of interference affecting high-priority communications, thereby ensuring a more stable network environment. In addition, network scalability may be more effectively maintained through centralized CAPC management. Enhanced LCP management from the base station may provide flexibility and robustness by enabling the network to efficiently handle various traffic types and an increasing number of devices.

For example, according to an embodiment of the present disclosure, enhanced LCP may be an LCP that uses type 2 listen before talk (LBT) and uses a shared COT. For example, legacy LCP may be an LCP that uses type 1 LBT and uses a shared COT.

For example, the operation described in this disclosure is described as unlicensed band operation between UEs, but it may also be applied to unlicensed band operation between a UE and a base station.

For example, in an embodiment of the present disclosure, a "channel" may be replaced with and applied as a "carrier" or a "resource block (RB) set of a specific carrier" or a "band".

For example, in an embodiment of the present disclosure, a "transmission resource" may be replaced with and applied as an "uplink grant" or a "sidelink grant".

For example, the present disclosure (e.g., whether or not (some of) the proposed method/rule of the present disclosure is applied and/or related parameter(s) (e.g., threshold value(s))) may be configured specifically (and/or differently and/or independently) based on whether LBT succeeds/fails, per LBT-related energy detection levels, per sidelink channels (PSCCH/PSSCH, PSFCH, SL-SSB (or S-SSB)), based on whether Multi-Consecutive Slot transmission (MCSt) is applied, based on whether multi-PSFCH occasions are applied, based on resource order/location consist of MCSt, based on whether multiple starting points are configured within one slot, based on whether the 1st starting point (or 2nd starting point) is applied, etc.

For example, the present disclosure (e.g., whether or not (some of) the proposed method/rule of the present disclosure is applied and/or related parameter(s) (e.g., threshold value(s))) may be configured specifically (and/or differently and/or independently) based on each SL-Channel Access Priority Class (CAPC). For example, the present disclosure (e.g., whether or not (some of) the proposed method/rule of the present disclosure is applied and/or related parameter(s) (e.g., threshold value(s))) may be configured specifically (and/or differently and/or independently) based on each SL-LBT type (e.g., Type 1 LBT, Type 2A LBT, Type 2B LBT, Type 2C LBT). For example, the present disclosure (e.g., whether or not (some of) the proposed method/rule of the present disclosure is applied and/or related parameter(s) (e.g., threshold value(s))) may be configured specifically (and/or differently and/or independently) based on whether or not Frame Based LBT is applied. For example, the present disclosure (e.g., whether or not (some of) the proposed method/rule of the present disclosure is applied and/or related parameter(s) (e.g., threshold value(s))) may be configured specifically (and/or differently and/or independently) based on whether or not Load Based LBT is applied.

For example, the present disclosure (e.g., whether or not (some of) the proposed method/rule of the present disclosure is applied and/or related parameter(s) (e.g., threshold value(s))) may be configured specifically (and/or differently and/or independently) based on each resource pool. For example, the present disclosure (e.g., whether or not (some of) the proposed method/rule of the present disclosure is applied and/or related parameter(s) (e.g., threshold value(s))) may be configured specifically (and/or differently and/or independently) based on each congestion level. For example, the present disclosure (e.g., whether or not (some of) the proposed method/rule of the present disclosure is applied and/or related parameter(s) (e.g., threshold value(s))) may be configured specifically (and/or differently and/or independently) based on each service priority. For example, the present disclosure (e.g., whether or not (some of) the proposed method/rule of the present disclosure is applied and/or related parameter(s) (e.g., threshold value(s))) may be configured specifically (and/or differently and/or independently) based on each service type. For example, the present disclosure (e.g., whether or not (some of) the proposed method/rule of the present disclosure is applied and/or related parameter(s) (e.g., threshold value(s))) may be configured specifically (and/or differently and/or independently) based on each QoS requirement (e.g., latency, reliability). For example, the present disclosure (e.g., whether or not (some of) the proposed method/rule of the present disclosure is applied and/or related parameter(s) (e.g., threshold value(s))) may be configured specifically (and/or differently and/or independently) based on each PQI (5G QoS identifier (5QI) for PC5). For example, the present disclosure (e.g., whether or not (some of) the proposed method/rule of the present disclosure is applied and/or related parameter(s) (e.g., threshold value(s))) may be configured specifically (and/or differently and/or independently) based on each traffic type (e.g., periodic generation or aperiodic generation). For example, the present disclosure (e.g., whether or not (some of) the proposed method/rule of the present disclosure is applied and/or related parameter(s) (e.g., threshold value(s))) may be configured specifically (and/or differently and/or independently) based on each SL transmission resource allocation mode (e.g., mode 1 or mode 2). For example, the present disclosure (e.g., whether or not (some of) the proposed method/rule of the present disclosure is applied and/or related parameter(s) (e.g., threshold value(s))) may be configured specifically (and/or differently and/or independently) based on each Tx profile (e.g., a Tx profile indicating that a service supports sidelink DRX operation or a Tx profile indicating that a service does not need to support sidelink DRX operation).

For example, the present disclosure (e.g., whether or not the proposed rule is applied (and/or a related parameter configured value)) may be specifically (and/or independently and/or differently) configured for at least one of: whether to support PUCCH configuration (e.g., in a case where a PUCCH resource is configured or in a case where a PUCCH resource is not configured), a resource pool (e.g., a resource pool where a PSFCH is configured, or a resource pool where a PSFCH is not configured), service/packet type (and/or priority), a QoS profile or QoS requirement (e.g., URLLC/eMBB traffic, reliability, latency), PQI, PFI, cast type (e.g., unicast, groupcast, broadcast), a (resource pool) congestion level (e.g., CBR), SL HARQ feedback scheme (e.g., NACK-only feedback, ACK/NACK feedback), transmitting a HARQ feedback enabled MAC PDU (and/or a HARQ feedback disabled MAC PDU), whether to configure a PUCCH-based SL HARQ feedback reporting operation, (non-)performing pre-emption (and/or re-evaluation) (or resource reselection based thereon), (L2 or L1) identifiers (source and/or destination), (L2 or L1) identifiers of a combination of source layer ID and destination layer ID, (L2 or L1) identifiers of a combination of a pair of source layer ID and destination layer ID and a cast type, a direction of a pair of source layer ID and destination layer ID, PC5 RRC connection/link, (non-)performing (or supporting) SL DRX, an SL mode type (resource allocation mode 1, resource allocation mode 2), (non-)performing periodic resource reservation, and a Tx profile (e.g., a Tx profile indicating that the service supports sidelink DRX operation, or a Tx profile indicating that the service does not need to support sidelink DRX operation).

For example, the present disclosure (e.g., whether or not the proposed rule is applied (and/or a related parameter configured value)) may be specifically (and/or independently and/or differently) configured for whether to support PUCCH configuration (e.g., in a case where a PUCCH resource is configured or in a case where a PUCCH resource is not configured). For example, the present disclosure (e.g., whether or not the proposed rule is applied (and/or a related parameter configured value)) may be specifically (and/or independently and/or differently) configured for a resource pool (e.g., a resource pool where a PSFCH is configured, or a resource pool where a PSFCH is not configured). For example, the present disclosure (e.g., whether or not the proposed rule is applied (and/or a related parameter configured value)) may be specifically (and/or independently and/or differently) configured for a resource pool (e.g., a resource pool where a PSFCH is configured, or a resource pool where a PSFCH is not configured) service/packet type (and/or priority). For example, the present disclosure (e.g., whether or not the proposed rule is applied (and/or a related parameter configured value)) may be specifically (and/or independently and/or differently) configured for a QoS profile or QoS requirement (e.g., URLLC/eMBB traffic, reliability, latency). For example, the present disclosure (e.g., whether or not the proposed rule is applied (and/or a related parameter configured value)) may be specifically (and/or independently and/or differently) configured for PQI. For example, the present disclosure (e.g., whether or not the proposed rule is applied (and/or a related parameter configured value)) may be specifically (and/or independently and/or differently) configured for PFI. For example, the present disclosure (e.g., whether or not the proposed rule is applied (and/or a related parameter configured value)) may be specifically (and/or independently and/or differently) configured for cast type. For example, the present disclosure (e.g., whether or not the proposed rule is applied (and/or a related parameter configured value)) may be specifically (and/or independently and/or differently) configured for unicast. For example, the present disclosure (e.g., whether or not the proposed rule is applied (and/or a related parameter configured value)) may be specifically (and/or independently and/or differently) configured for groupcast. For example, the present disclosure (e.g., whether or not the proposed rule is applied (and/or a related parameter configured value)) may be specifically (and/or independently and/or differently) configured for broadcast. For example, the present disclosure (e.g., whether or not the proposed rule is applied (and/or a related parameter configured value)) may be specifically (and/or independently and/or differently) configured for a (resource pool) congestion level (e.g., CBR). For example, the present disclosure (e.g., whether or not the proposed rule is applied (and/or a related parameter configured value)) may be specifically (and/or independently and/or differently) configured for SL HARQ feedback scheme (e.g., NACK-only feedback, ACK/NACK feedback). For example, the present disclosure (e.g., whether or not the proposed rule is applied (and/or a related parameter configured value)) may be specifically (and/or independently and/or differently) configured for transmitting a HARQ feedback enabled MAC PDU (and/or a HARQ feedback disabled MAC PDU). For example, the present disclosure (e.g., whether or not the proposed rule is applied (and/or a related parameter configured value)) may be specifically (and/or independently and/or differently) configured for whether to configure a PUCCH-based SL HARQ feedback reporting operation. For example, the present disclosure (e.g., whether or not the proposed rule is applied (and/or a related parameter configured value)) may be specifically (and/or independently and/or differently) configured for (non-)performing pre-emption (and/or re-evaluation) (or resource reselection based thereon). For example, the present disclosure (e.g., whether or not the proposed rule is applied (and/or a related parameter configured value)) may be specifically (and/or independently and/or differently) configured for (L2 or L1) identifiers (source and/or destination). For example, the present disclosure (e.g., whether or not the proposed rule is applied (and/or a related parameter configured value)) may be specifically (and/or independently and/or differently) configured for (L2 or L1) identifiers of a combination of source layer ID and destination layer ID. For example, the present disclosure (e.g., whether or not the proposed rule is applied (and/or a related parameter configured value)) may be specifically (and/or independently and/or differently) configured for (L2 or L1) identifiers of a combination of a pair of source layer ID and destination layer ID and a cast type. For example, the present disclosure (e.g., whether or not the proposed rule is applied (and/or a related parameter configured value)) may be specifically (and/or independently and/or differently) configured for a direction of a pair of source layer ID and destination layer ID. For example, the present disclosure (e.g., whether or not the proposed rule is applied (and/or a related parameter configured value)) may be specifically (and/or independently and/or differently) configured for PC5 RRC connection/link. For example, the present disclosure (e.g., whether or not the proposed rule is applied (and/or a related parameter configured value)) may be specifically (and/or independently and/or differently) configured for (non-)performing (or supporting) SL DRX. For example, the present disclosure (e.g., whether or not the proposed rule is applied (and/or a related parameter configured value)) may be specifically (and/or independently and/or differently) configured for an SL mode type (resource allocation mode 1, resource allocation mode 2). For example, the present disclosure (e.g., whether or not the proposed rule is applied (and/or a related parameter configured value)) may be specifically (and/or independently and/or differently) configured for (non-)performing periodic resource reservation. For example, the present disclosure (e.g., whether or not the proposed rule is applied (and/or a related parameter configured value)) may be specifically (and/or independently and/or differently) configured for a Tx profile (e.g., a Tx profile indicating that the service supports sidelink DRX operation, or a Tx profile indicating that the service does not need to support sidelink DRX operation).

The proposal and whether or not the proposal rule of the present disclosure is applied (and/or related parameter configuration value(s)) may also be applied to a mmWave (SL) operation.

FIG. 20 shows a method for a first device to perform wireless communication, based on an embodiment of the present disclosure. The embodiment of FIG. 20 may be combined with various embodiments of the present disclosure.

Referring to FIG. 20, in step S2010, the first device may receive, from a second device, information related to channel occupancy time (COT) sharing. In step S2020, the first device may receive, from a base station, downlink control information (DCI) including information related to a first channel access priority class (CAPC). In step S2030, the first device may, based on selection of a logical channel, perform transmission. For example, based on the information related to the COT sharing and the information related to the first CAPC, whether the selected logical channel is a logical channel in which type 2 listen before talk (LBT) is used in a shared COT related to the COT sharing may be determined.

For example, the logical channel in which the type 2 LBT is used in the shared COT may be related to enhanced logical channel prioritization (LCP).

For example, based on the information related to the COT sharing, and based on that a value of a second CAPC related to data related to the logical channel is less than or equal to a value of the first CAPC, the selected logical channel may be the logical channel in which the type 2 LBT is used in the shared COT. For example, the transmission may be performed by using the type 2 LBT in the shared COT based on the selection of the logical channel in which the type 2 LBT is used in the shared COT.

For example, the value of the second CAPC may be a representative CAPC among CAPC values related to the data related to the logical channel.

For example, based on the information related to the COT sharing, and based on that a value of a second CAPC related to data related to the logical channel is greater than a value of the first CAPC, the selected logical channel may be a logical channel in which type 1 LBT is used in the shared COT. For example, the transmission may be performed by using the type 1 LBT in the shared COT based on the selection of the logical channel in which the type 1 LBT is used in the shared COT.

For example, the selection of the logical channel in which the type 1 LBT is used in the shared COT may be related to legacy LCP.

For example, the type 2 LBT may be at least one of type 2A LBT, type 2B LBT, or type 2C LBT.

For example, based on the information related to COT sharing, based on that an ID of the second device matches an ID of the first device, and based on that the value of the second CAPC is less than or equal to the value of the first CAPC, the selected logical channel may be the logical channel in which the type 2 LBT is used in the shared COT.

For example, the ID of the first device may be a destination ID of the first device. For example, the ID of the second device may be a source ID of the second device.

For example, the information related to COT sharing may include information related to a third CAPC. For example, based on the information related to COT sharing, based on that the value of the second CAPC is less than or equal to the value of the first CAPC, and based on that a value of the second CAPC is less than or equal to a value of the third CAPC, the selected logical channel may be the logical channel in which the type 2 LBT is used in the shared COT.

For example, the first device may be a responding user equipment (UE).

For example, the second device may be a COT initiating UE.

For example, the transmission may be a sidelink (SL) transmission.

The proposed method can be applied to the device, based on various embodiments of the present disclosure. First, the processor 102 of the first device 100 may control the transceiver 106 to receive, from a second device, information related to channel occupancy time (COT) sharing. In addition, the processor 102 of the first device 100 may control the transceiver 106 to receive, from a base station, downlink control information (DCI) including information related to a first channel access priority class (CAPC). In addition, the processor 102 of the first device 100 may, based on selection of a logical channel, control the transceiver 106 to perform transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment of the present disclosure, a first device adapted to perform wireless communication may be provided. For example, the first device may include: at least one transceiver; at least one processor; and at least one memory connected to the at least one processor and storing instructions. For example, the instructions, based on being executed by the at least one processor, may cause the first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment of the present disclosure, a processing device adapted to control a first device may be provided. The processing device may include: at least one processor; and at least one memory connected to the at least one processor and storing instructions. For example, the instructions, based on being executed by the at least one processor, may cause the first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

Based on an embodiment of the present disclosure, a non-transitory computer-readable storage medium storing instructions may be provided. For example, the instructions, based on being executed, may cause a first device to perform operations comprising: receiving, from a second device, information related to channel occupancy time (COT) sharing; receiving, from a base station, downlink control information (DCI) including information related to a first channel access priority class (CAPC); and based on selection of a logical channel, performing transmission. For example, based on the information related to the COT sharing and the information related to the first CAPC, whether the selected logical channel is a logical channel in which type 2 listen before talk (LBT) is used in a shared COT related to the COT sharing may be determined.

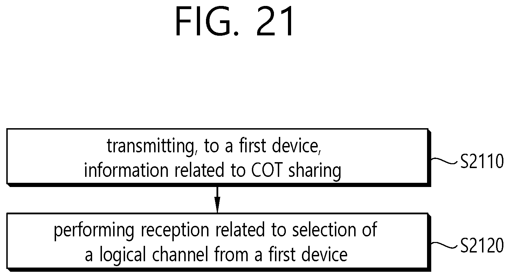

FIG. 21 shows a method for a second device to perform wireless communication, based on an embodiment of the present disclosure. The embodiment of FIG. 21 may be combined with various embodiments of the present disclosure.

Referring to FIG. 21, in step S2110, the second device may transmit, to a first device, information related to channel occupancy time (COT) sharing. In step S2120, the second device may perform reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

For example, the logical channel in which the type 2 LBT is used in the shared COT may be related to enhanced logical channel prioritization (LCP).

For example, based on the information related to the COT sharing, and based on that a value of a second CAPC related to data related to the logical channel is less than or equal to a value of the first CAPC, the selected logical channel may be the logical channel in which the type 2 LBT is used in the shared COT. For example, the reception may be performed by using the type 2 LBT in the shared COT based on the selection of the logical channel in which the type 2 LBT is used in the shared COT.

For example, the value of the second CAPC may be a representative CAPC among CAPC values related to the data related to the logical channel.

For example, based on the information related to the COT sharing, and based on that a value of a second CAPC related to data related to the logical channel is greater than a value of the first CAPC, the selected logical channel may be a logical channel in which type 1 LBT is used in the shared COT. For example, the reception may be performed by using the type 1 LBT in the shared COT based on the selection of the logical channel in which the type 1 LBT is used in the shared COT.

For example, the selection of the logical channel in which the type 1 LBT is used in the shared COT may be related to legacy LCP.

For example, the type 2 LBT may be at least one of type 2A LBT, type 2B LBT, or type 2C LBT.

For example, based on the information related to COT sharing, based on that an ID of the second device matches an ID of the first device, and based on that the value of the second CAPC is less than or equal to the value of the first CAPC, the selected logical channel may be the logical channel in which the type 2 LBT is used in the shared COT.

For example, the ID of the first device may be a destination ID of the first device. For example, the ID of the second device may be a source ID of the second device.

For example, the information related to COT sharing may include information related to a third CAPC. For example, based on the information related to COT sharing, based on that the value of the second CAPC is less than or equal to the value of the first CAPC, and based on that a value of the second CAPC is less than or equal to a value of the third CAPC, the selected logical channel may be the logical channel in which the type 2 LBT is used in the shared COT.

For example, the first device may be a responding user equipment (UE).

For example, the second device may be a COT initiating UE.

For example, the reception may be a sidelink (SL) reception.

The proposed method can be applied to the device, based on various embodiments of the present disclosure. First, the processor 202 of the second device 200 may control the transceiver 206 to transmit, to a first device, information related to channel occupancy time (COT) sharing. In addition, the processor 202 of the second device 200 may control the transceiver 206 to perform reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment of the present disclosure, a second device adapted to perform wireless communication may be provided. For example, the second device may include: at least one transceiver; at least one processor; and at least one memory connected to the at least one processor and storing instructions. For example, the instructions, based on being executed by the at least one processor, may cause the second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment of the present disclosure, a processing device adapted to control a second device may be provided. The processing device may include: at least one processor; and at least one memory connected to the at least one processor and storing instructions. For example, the instructions, based on being executed by the at least one processor, may cause the second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Based on an embodiment of the present disclosure, a non-transitory computer-readable storage medium storing instructions may be provided. For example, the instructions, based on being executed, may cause a second device to perform operations comprising: transmitting, to a first device, information related to channel occupancy time (COT) sharing; and performing reception related to selection of a logical channel from the first device. For example, based on the information related to the COT sharing and information related to a first channel access priority class (CAPC), whether the selected logical channel is a logical channel in which type 2 listen before talk (LBT) is used in a shared COT related to the COT sharing may be determined. For example, the first CAPC may be related to that downlink control information (DCI) including the information related to the first CAPC is transmitted from a base station.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

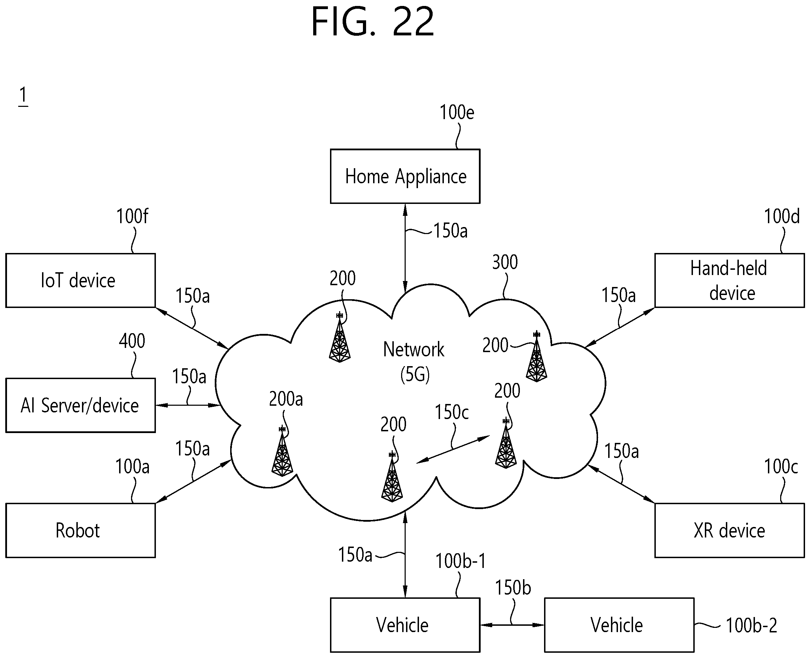

FIG. 22 shows a communication system 1, based on an embodiment of the present disclosure. The embodiment of FIG. 22 may be combined with various embodiments of the present disclosure.

Referring to FIG. 22, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

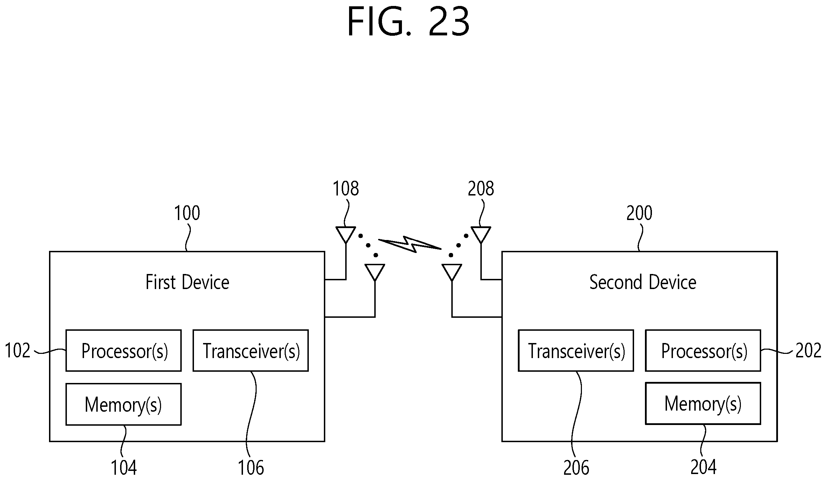

FIG. 23 shows wireless devices, based on an embodiment of the present disclosure. The embodiment of FIG. 23 may be combined with various embodiments of the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

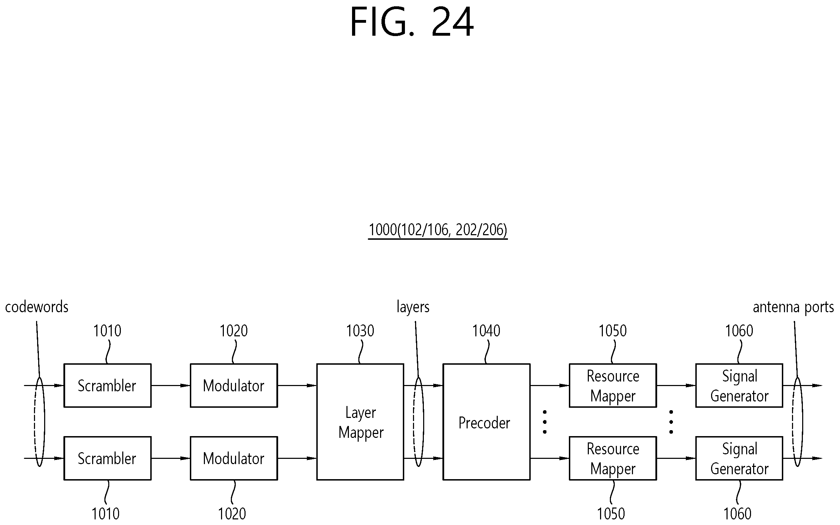

FIG. 24 shows a signal process circuit for a transmission signal, based on an embodiment of the present disclosure. The embodiment of FIG. 24 may be combined with various embodiments of the present disclosure.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 23. Hardware elements of FIG. 24 may be implemented by the processors 102 and 202 and/or the transceivers 106 and 206 of FIG. 23. For example, blocks 1010 to 1060 may be implemented by the processors 102 and 202 of FIG. 23. Alternatively, the blocks 1010 to 1050 may be implemented by the processors 102 and 202 of FIG. 23 and the block 1060 may be implemented by the transceivers 106 and 206 of FIG. 23.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 23) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

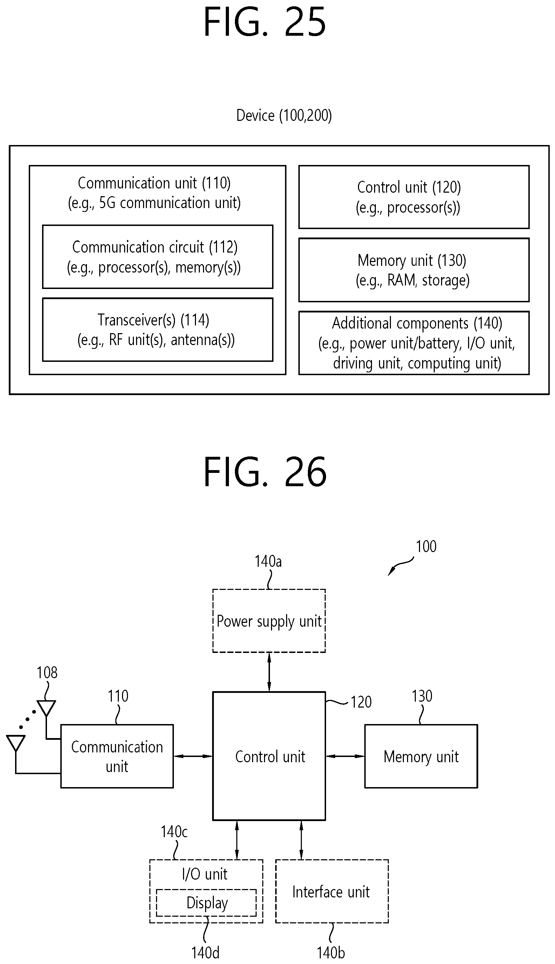

FIG. 25 shows another example of a wireless device, based on an embodiment of the present disclosure. The wireless device may be implemented in various forms according to a use-case/service (refer to FIG. 22). The embodiment of FIG. 25 may be combined with various embodiments of the present disclosure.

Referring to FIG. 25, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

FIG. 26 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 26 may be combined with various embodiments of the present disclosure.

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

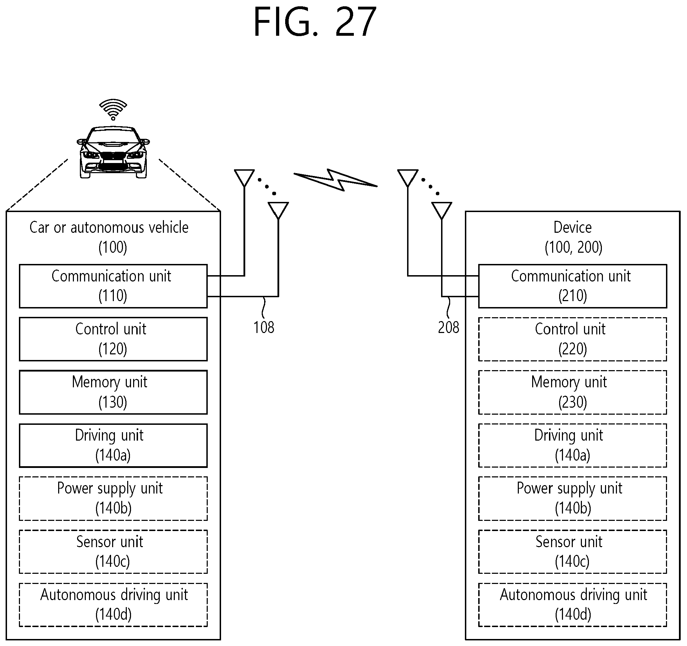

FIG. 27 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 27 may be combined with various embodiments of the present disclosure.

Referring to FIG. 27, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1.    A method performed by a first device in a wireless communication system, the method comprising:

   receiving, from a second device, information related to channel occupancy time (COT) sharing;
   receiving, from a base station, downlink control information (DCI) including information related to a first channel access priority class (CAPC); and
   based on selection of a logical channel, performing transmission,
   wherein, based on the information related to the COT sharing and the information related to the first CAPC, whether the selected logical channel is a logical channel in which type 2 listen before talk (LBT) is used in a shared COT related to the COT sharing is determined.

2. The method of claim 1,
wherein the logical channel in which the type 2 LBT is used in the shared COT is related to enhanced logical channel prioritization (LCP).

3. The method of claim 1,

   wherein, based on the information related to the COT sharing, and based on that a value of a second CAPC related to data related to the logical channel is less than or equal to a value of the first CAPC, the selected logical channel is the logical channel in which the type 2 LBT is used in the shared COT, and
   wherein the transmission is performed by using the type 2 LBT in the shared COT based on the selection of the logical channel in which the type 2 LBT is used in the shared COT.

4. The method of claim 3,
wherein the value of the second CAPC is a representative CAPC among CAPC values related to the data related to the logical channel.

5. The method of claim 1,

   wherein, based on the information related to the COT sharing, and based on that a value of a second CAPC related to data related to the logical channel is greater than a value of the first CAPC, the selected logical channel is a logical channel in which type 1 LBT is used in the shared COT, and
   wherein the transmission is performed by using the type 1 LBT in the shared COT based on the selection of the logical channel in which the type 1 LBT is used in the shared COT.

6. The method of claim 5,
wherein the selection of the logical channel in which the type 1 LBT is used in the shared COT is related to legacy LCP.

7. The method of claim 1,
wherein the type 2 LBT is at least one of type 2A LBT, type 2B LBT, or type 2C LBT.

8. The method of claim 3,
wherein, based on the information related to COT sharing, based on that an ID of the second device matches an ID of the first device, and based on that the value of the second CAPC is less than or equal to the value of the first CAPC, the selected logical channel is the logical channel in which the type 2 LBT is used in the shared COT.

9. The method of claim 8,

   wherein the ID of the first device is a destination ID of the first device, and
   wherein the ID of the second device is a source ID of the second device.

10. The method of claim 3,

    wherein the information related to COT sharing includes information related to a third CAPC, and
    based on the information related to COT sharing, based on that the value of the second CAPC is less than or equal to the value of the first CAPC, and based on that a value of the second CAPC is less than or equal to a value of the third CAPC, the selected logical channel is the logical channel in which the type 2 LBT is used in the shared COT.

11. The method of claim 1,
wherein the first device is a responding user equipment (UE).

12. The method of claim 1,
wherein the second device is a COT initiating UE.

13. The method of claim 1,
wherein the transmission is a sidelink (SL) transmission.

14. A first device adapted to perform wireless communication, the first device comprising:

EP 4 761 444 A1

at least one transceiver;

at least one processor; and

at least one memory connected to the at least one processor and storing instructions that, based on being executed by the at least one processor, cause the first device to perform operations comprising:

receiving, from a second device, information related to channel occupancy time (COT) sharing;

receiving, from a base station, downlink control information (DCI) including information related to a first channel access priority class (CAPC); and

based on selection of a logical channel, performing transmission,

wherein, based on the information related to the COT sharing and the information related to the first CAPC, whether the selected logical channel is a logical channel in which type 2 listen before talk (LBT) is used in a shared COT related to the COT sharing is determined.

15. A processing device adapted to control a first device, the processing device comprising:

at least one processor; and

at least one memory connected to the at least one processor and storing instructions that, based on being executed by the at least one processor, cause the first device to perform operations comprising:

receiving, from a second device, information related to channel occupancy time (COT) sharing;

receiving, from a base station, downlink control information (DCI) including information related to a first channel access priority class (CAPC); and

based on selection of a logical channel, performing transmission,

wherein, based on the information related to the COT sharing and the information related to the first CAPC, whether the selected logical channel is a logical channel in which type 2 listen before talk (LBT) is used in a shared COT related to the COT sharing is determined.

16. A non-transitory computer-readable storage medium storing instructions that, based on being executed, cause a first device to perform operations comprising:

receiving, from a second device, information related to channel occupancy time (COT) sharing;

receiving, from a base station, downlink control information (DCI) including information related to a first channel access priority class (CAPC); and

based on selection of a logical channel, performing transmission,

wherein, based on the information related to the COT sharing and the information related to the first CAPC, whether the selected logical channel is a logical channel in which type 2 listen before talk (LBT) is used in a shared COT related to the COT sharing is determined.

17. A method performed by a second device in a wireless communication system, the method comprising:

transmitting, to a first device, information related to channel occupancy time (COT) sharing; and

performing reception related to selection of a logical channel from the first device,

wherein, based on the information related to the COT sharing and information related to a first channel access priority class (CAPC), whether the selected logical channel is a logical channel in which type 2 listen before talk (LBT) is used in a shared COT related to the COT sharing is determined, and

wherein the first CAPC is related to that downlink control information (DCI) including the information related to the first CAPC is transmitted from a base station.

18. A second device adapted to perform wireless communication, the second device comprising:

at least one transceiver;

at least one processor; and

at least one memory connected to the at least one processor and storing instructions that, based on being executed by the at least one processor, cause the second device to perform operations comprising:

transmitting, to a first device, information related to channel occupancy time (COT) sharing; and

performing reception related to selection of a logical channel from the first device,

wherein, based on the information related to the COT sharing and information related to a first channel access priority class (CAPC), whether the selected logical channel is a logical channel in which type 2 listen before talk (LBT) is used in a shared COT related to the COT sharing is determined, and
wherein the first CAPC is related to that downlink control information (DCI) including the information related to the first CAPC is transmitted from a base station.

19. A processing device adapted to control a second device, the processing device comprising:

at least one processor; and
at least one memory connected to the at least one processor and storing instructions that, based on being executed by the at least one processor, cause the second device to perform operations comprising:

transmitting, to a first device, information related to channel occupancy time (COT) sharing; and
performing reception related to selection of a logical channel from the first device,
wherein, based on the information related to the COT sharing and information related to a first channel access priority class (CAPC), whether the selected logical channel is a logical channel in which type 2 listen before talk (LBT) is used in a shared COT related to the COT sharing is determined, and
wherein the first CAPC is related to that downlink control information (DCI) including the information related to the first CAPC is transmitted from a base station.

20. A non-transitory computer-readable storage medium storing instructions that, based on being executed, cause a second device to perform operations comprising:

transmitting, to a first device, information related to channel occupancy time (COT) sharing; and
performing reception related to selection of a logical channel from the first device,
wherein, based on the information related to the COT sharing and information related to a first channel access priority class (CAPC), whether the selected logical channel is a logical channel in which type 2 listen before talk (LBT) is used in a shared COT related to the COT sharing is determined, and
wherein the first CAPC is related to that downlink control information (DCI) including the information related to the first CAPC is transmitted from a base station.

# FIG. 1

# FIG. 2

| | Radio | Microwave | | Infrared | Visible | Ultraviolet | X-Ray | Gamma-Ray |
|---|---|---|---|---|---|---|---|---|

mmWave | Terahertz

Wavelength  $10^8$ m  1m  10mm  1mm  0.1mm  700nm  390nm  10nm  0.01nm

Radiation Type

Frequency  3 Hz  300 MHz  30 GHz  300 GHz  3 THz  430 THz  730 THz  30 PHz  30 EHz

| Mega : $10^6$ | Giga : $10^9$ | Tera : $10^{12}$ | Peta : $10^{15}$ | Exa : $10^{18}$ |

# FIG. 3

EP 4 761 444 A1

# FIG. 4

Satellite
(or UAS platform)

Satellite
(or UAS platform)

ISL

Feeder link

Service
link

Feeder link
(mandatory if on ISL)

Data network

Gateway

Beam foot
print

User
Equipments

Field of view of the satellite
(or UAS platform)

EP 4 761 444 A1

# FIG. 5

(a)

3GPP system

Object

Object

Sensing Receiver

Sensing Transmitter

3GPP sensing data

Processing

Sensing results

wireless sensing service

Sensing results

Trusted 3rd party

Sensing signals

(b)

3GPP system

Sensing Transmitter

Sensing signals

Sensing Receiver

3GPP sensing data

Processing

Sensing results

wireless sensing service

Sensing results

Trusted 3rd party

Object

Object

# FIG. 6

Resource grid

A carrier
(up to 3300 subcarriers,
i.e., 275 RBs)

A BWP

1RB=12 subcarriers

1 RE

1subcarrier

1 symbol

l=0 ・・・

k=0

EP 4 761 444 A1

# FIG. 7

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

BS | first UE | second UE | first UE | second UE

resource scheduling — S800

PSCCH — S810

PSSCH — S820

PSFCH — S830

PUCCH/PUSCH — S840

PSCCH — S810

PSSCH — S820

PSFCH — S830

(a)

(b)

# FIG. 9

Frequency
Bandwidth
(e.g., BWP, RB set)

One RB interlace

Consecutive (P)RB(s)
(e.g., 1 (P)RB)

Time instance/duration

# FIG. 10

(a) Carrier aggregation between L-band and U-band

(b) Standalone U-band(s)

# FIG. 11

Unoccupied

Occupied

| Channel Occupancy Time | | | | Channel Occupancy Time | | |

Extended CCA

CCA

# FIG. 12

Frequency

LBT-SB#(K-1)
(e.g., 20MHz)

⋮

BWP

LBT-SB#1
(e.g., 20MHz)

LBT-SB#0
(e.g., 20MHz)

# FIG. 13

Start CAP (S110) → Step 1 (S120) → Step 4 (S130)
- YES → Terminate CAP (S132) → Transmit Tx bust (S134)
- NO → Step 2 (S140) → Step 3 (S150)
  - YES → (loop back)
  - NO → Step 5 (S160) → Step 6 (S170)
    - NO → (loop back to Step 5)
    - YES → (loop back)

# FIG. 14

```
┌─────────────────────┐
│      Start CAP      │─── S210
└─────────────────────┘
          │
          ▼
┌─────────────────────┐
│       Step 1        │─── S220
└─────────────────────┘
          │
          ▼      S230
      ◇─────────◇        YES    ┌──────────────────┐        ┌──────────────────┐
      │  Step 4  │─────────────▶│  Terminate CAP   │───────▶│ Transmit Tx bust │
      ◇─────────◇               └──────────────────┘        └──────────────────┘
          │ NO                         S232                         S234
          ▼
┌─────────────────────┐
│       Step 2        │─── S240
└─────────────────────┘
          │
          ▼      S250
      ◇─────────◇
 YES  │  Step 3  │
      ◇─────────◇
          │ NO
          ▼
┌─────────────────────┐
│       Step 5        │─── S260
└─────────────────────┘
          │
          ▼      S270
      ◇─────────◇
 NO   │  Step 6  │
      ◇─────────◇
          │ YES
```

EP 4 761 444 A1

FIG. 15

Payload

Contention

contention resumes as soon as channel is idle

(a) Load Based Equipment. Devices contend for the channel as soon as the channel becomes idle

Payload transmission can end before the beginning of next frame boundary

Payload

Frame interval

Contention resumes only in the next frame interval

Contention

Frame boundaries

(b) Frame Based Equipment. Devices contend for the channel only at the beginning of a new frame

# FIG. 16

LBT Failure
Indication(s)

LBT Failure
Detected

Counter=0      Counter=1      Counter=2      Counter=3

Timer Started      Timer Re-Started      Timer Re-Started

LBT Failure
Indication(s)

Counter=0      Counter=1      Counter=0

Timer Started      Timer expires
Counter reset to 0

EP 4 761 444 A1

# FIG. 17

Obtained COT

COT
initiating UE

SL Data

Type 2 LBT: transmission is available if idle after sensing

COT
shared UE

# FIG. 18

EP 4 761 444 A1

Obtained COT

| SL Data | | COT_END MAC CE | COT return |

Type 2 LBT: transmission is available if idle after sensing

Type 1 LBT: random backoff-based LBT

COT initiating UE

COT shared UE

# FIG. 19

base station | first device | second device

transmitting information related to COT sharing — S1910

transmitting DCI including information related to a CAPC — S1920

based on information related to COT sharing and information related to a CAPC, determining whether a logical channel used for transmission is a logical channel in which type 2 LBT is used in a shared COT related to COT sharing — S1930

# FIG. 20

receiving, from a second device, information related to COT sharing — S2010

receiving, from a base station, DCI including information related to a CAPC — S2020

based on selection of a logical channel, performing transmission — S2030

# FIG. 21

| transmitting, to a first device,<br>information related to COT sharing | ~S2110 |

↓

| performing reception related to selection of<br>a logical channel from a first device | ~S2120 |

# FIG. 22

# FIG. 23

EP 4 761 444 A1

# FIG. 24

1000(102/106, 202/206)

codewords

1010

Scrambler

1020

Modulator

1030

Layer
Mapper

layers

1040

Precoder

1050

Resource
Mapper

1060

Signal
Generator

antenna ports

1010

Scrambler

1020

Modulator

1050

Resource
Mapper

1060

Signal
Generator

# FIG. 25

Device (100,200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 26

100

140a

Power supply unit

108

110

120

130

Communication unit

Control unit

Memory unit

140c

I/O unit

Display

Interface unit

140d

140b

# FIG. 27

Car or autonomous vehicle
(100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108

Device
(100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

208

EP 4 761 444 A1

## INTERNATIONAL SEARCH REPORT

| International application No. |
| --- |
| **PCT/KR2024/012018** |

| A. | CLASSIFICATION OF SUBJECT MATTER |
| --- | --- |

**H04W 72/50**(2023.01)i; **H04W 72/25**(2023.01)i; **H04W 74/0808**(2024.01)i; **H04W 24/08**(2009.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 72/50(2023.01); H04W 74/08(2009.01); H04W 76/14(2018.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: COT(channel occupancy time), 공유(share), CAPC(channel access priority class), 논리 채널 선택(logical channel selection), 타입 2 LBT(type 2 listen before talk)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | XIAOMI. Discussion on LCP restriction from COT sharing. R2-2305228, 3GPP TSG-RAN WG2 Meeting #122. Incheon, Korea. 12 May 2023.<br>See sections 2-5; and figures 1-2. | 1,2,7,11-20<br>3-6,8-10 |
| Y | APPLE. Control plane aspects of sidelink on unlicensed spectrum (SL-U). R2-2209761, 3GPP TSG-RAN WG2 Meeting #119b-e, E-Conference. 30 September 2022.<br>See page 3. | 1,2,7,11-20 |
| A | CATT. Further Discussion on SL LBT and LCP. R2-2305283, 3GPP TSG-RAN WG2 Meeting #122. Incheon, Korea. 12 May 2023.<br>See pages 3-5. | 1-20 |
| A | US 2022-0210827 A1 (TELEFONAKTIEBOLAGET LM ERICSSON (PUBL)) 30 June 2022 (2022-06-30)<br>See abstract; paragraphs [0129]-[0140]; and claim 1. | 1-20 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 November 2024** | **08 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 761 444 A1**

**INTERNATIONAL SEARCH REPORT**

International application No.

**PCT/KR2024/012018**

**C.  DOCUMENTS CONSIDERED TO BE RELEVANT**

| Category* | Citation of document, with indication, where appropriate, of the relevant passages | Relevant to claim No. |
|---|---|---|
| A | WO 2022-241734 A1 (NOKIA TECHNOLOGIES OY) 24 November 2022 (2022-11-24)<br>See paragraphs [0033]-[0064]; and figures 3-7B. | 1-20 |

Form PCT/ISA/210 (second sheet) (July 2022)

**INTERNATIONAL SEARCH REPORT**
Information on patent family members

International application No.

**PCT/KR2024/012018**

| Patent document cited in search report | | | Publication date (day/month/year) | Patent family member(s) | | | Publication date (day/month/year) |
|---|---|---|---|---|---|---|---|
| US | 2022-0210827 | A1 | 30 June 2022 | EP | 3922075 | A1 | 15 December 2021 |
| | | | | EP | 3922075 | B1 | 19 June 2024 |
| | | | | US | 12058733 | B2 | 06 August 2024 |
| | | | | WO | 2020-162804 | A1 | 13 August 2020 |
| WO | 2022-241734 | A1 | 24 November 2022 | CN | 115643826 | A | 24 January 2023 |
| | | | | US | 2024-0196433 | A1 | 13 June 2024 |

Form PCT/ISA/210 (patent family annex) (July 2022)